# EUROPEAN PATENT SPECIFICATION

(11) **EP 1 775 301 B1**
(45) Date of publication and mention of the grant of the patent: **10.08.2011**
(21) Application number: 05755175.6
(22) Date of filing: 28.06.2005
(51) Int. Cl.: C07F 9/24, B01J 31/02, C07F 9/6593, C08G 65/10

(54) **NOVEL SUPPORTED PHOSPHAZENE CATALYSTS, NOVEL COMPOUNDS FOR THE CATALYSTS, AND USE THEREOF**
NEUE GETRÄGERTE PHOSPHAZENKATALYSATOREN, NEUE VERBINDUNGEN FÜR DIE KATALYSATOREN UND ANWENDUNG DAVON
NOUVEAUX CATALYSEURS AU PHOSPHAZENE, NOUVEAUX COMPOSES DES CATALYSEURS, ET MODE D'EMPLOI

(30) Priority: 01.07.2004 JP 2004195236
(43) Date of publication of application: 18.04.2007
(73) Proprietor: Mitsui Chemicals, Inc., Tokyo 105-7117 (JP)
(72) Inventor: YOSHIMURA, Naritoshi, Sodegaura-shi, Chiba, 2990265 (JP); KIYONO, Shinji, Sodegaura-shi, Chiba, 2990265 (JP); MIZUTANI, Kazumi, Sodegaura-shi, Chiba, 2990265 (JP); HARA, Isao, Sodegaura-shi, Chiba, 2990265 (JP); HAYASHI, Takaomi, Sodegaura-shi, Chiba, 2990265 (JP); NOBORI, Tadahito, Sodegaura-shi, Chiba, 2990265 (JP); YAMAMOTO, Yoshihiro, Sodegaura-shi, Chiba, 2990265 (JP); KONNO, Miyuki, Sodegaura-shi, Chiba, 2990265 (JP); INOUE, Yoshihisa, Sodegaura-shi, Chiba, 2990265 (JP); MATSUURA, Akira, Sodegaura-shi, Chiba, 2990265 (JP); OHKUBO, Tuneyuki, Sodegaura-shi, Chiba, 2990265 (JP)
(74) Representative: Wiedemann, Peter
(86) International application number: PCT/JP2005/011855
(87) International publication number: WO 2006/003902

(56) References cited:
- WO-A-01/90220
- WO-A1-03/029322
- JP-A- 10 077 289
- JP-A- 10 077 289
- JP-A- 2000 128 830
- JP-A- 2001 026 644
- JP-A- 2003 534 420
- KIM KEUN-SIK ET AL: "Phosphazenium chloride catalysts immobilized on SBA-15 mesoporous material and silica gel: new exceptionally active catalysts for the chlorination of organic acids" CHEMICAL COMMUNICATIONS - CHEMCOM, ROYAL SOCIETY OF CHEMISTRY, GB, no. 3, 2003, pages 372-373, XP002420499 ISSN: 1359-7345

## Description

### BACKGROUND OF THE INVENTION

### 1. Technical Field

The present invention relates to a novel phosphazene-supported catalyst, a novel compound thereof and the use thereof. More specifically, the invention relates to a phosphazene-supported catalyst in which a support is bonded to a group represented by the general formula (1); a novel phosphazene compound and a novel phosphazenium salt which are useful for producing the supported catalyst; and a method for polymerizing a cyclic monomer, a method for substituting a substituent, and a reaction method for forming a carbon-carbon bond by using the supported catalyst.

### 2. Related Art

A phosphazenium salt represented by the following the general formula (9): 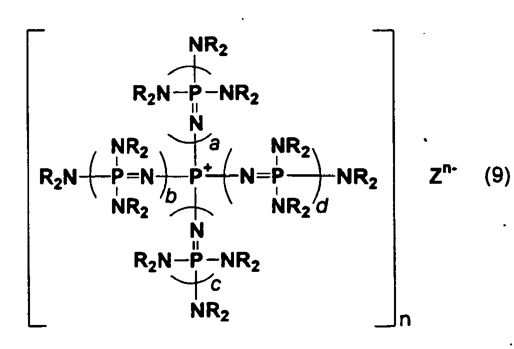 (wherein n is an integer of 1 to 8 and represents the number of phosphazenium cations, and Zⁿ⁻ is an anion of a n-valent active hydrogen compound in a form derived by releasing n protons from an active hydrogen compound having a maximum of 8 active hydrogen atoms on an oxygen atom or a nitrogen atom. a, b, c and d are a positive integer of 3 or less or 0, respectively, with the proviso that they are not all 0 at the same time. R's represent the same or different hydrocarbon groups having 1 to 10 carbon atoms and two R's located on each common nitrogen atom may be bonded to each other to form a ring structure.) is known as a compound which performs various catalytic reactions by forming stable cations and selecting counteranions (refer to JP-A No. 10-77289). Such the compound is effective in proceeding various catalytic reactions, but is relatively difficult to produce and is expensive and hence catalyst reuse is desirable. At the same time, it is known that a phosphazene compound having a binding site (so-called a phosphazene base) is bonded to a functional group of the support and supported thereon, and it is also known that such a supported catalyst is used to polymerize alkylene oxide (refer to Pamphlet of International Patent Application Publication No. WO01/90220).

The above-described supported catalyst is useful, but bonds a crosslinked organic polymer support directly or indirectly to a nitrogen atom bonded to a phosphorus atom in the center. This causes a problem that the stability of a cation is not high in terms of its chemical structure and thus is likely to decompose. The cation of the phosphazenium salt having the skeleton of the general formula (9) has high stability in terms of its chemical structure. However, it has not been possible to support the phosphazenium salt having the skeleton of the general formula (9) on a support to hence obtain such a supported catalyst, by means of a conventional method. Further, it was not known at all that a binding site was introduced to the phosphazenium salt represented by the general formula (9) and it was also not been known that the phosphazenium salt represented by the general formula (9) was effectively supported on the support with maintaining its performance as it is by producing and using the phosphazenium salt having the binding site.

Therefore, it is extremely useful to obtain a supported catalyst having the function of the phosphazenium salt represented by the general formula (9) as it is, and thus it is desired to develop such a supported catalyst.

### SUMMARY OF THE INVENTION

The present inventors have intensively studied on the catalyst to solve the above problems, and as a result, have found that a specific partial structural transformed product of the phosphazenium salt represented by the general formula (9) can be used to obtain a supported catalyst having the skeleton of the general formula (9) and thus to solve the above problems, and then have completed the invention.

Specifically, the invention relates to a phosphazene-supported catalyst in which a support is bonded to a group represented by the general formula (1): 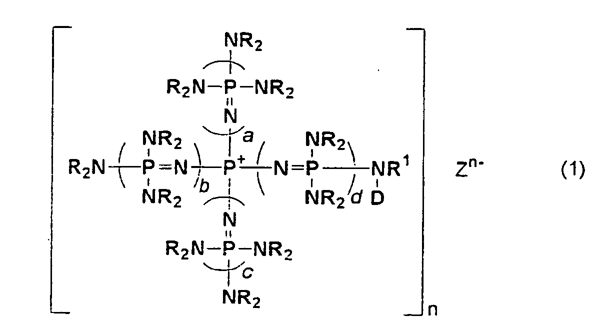 (wherein n is an integer of 1 to 8 and represents the number of phosphazenium cations, and Zⁿ⁻ is an anion of an active hydrogen compound in a form derived by releasing n protons from an active hydrogen compound having a maximum of 8 active hydrogen atoms as defined below. a, b, c and d are each a positive integer of 3 or less. R's represent the same or different hydrocarbon groups having 1 to 10 carbon atoms and two R's located on each common nitrogen atom optionally bind to each other to form a ring structure. R¹ is a hydrogen atom or a hydrocarbon group having 1 to 10 carbon atoms. D is a direct bond or a divalent group and binds the catalyst to the support , the divalent group being defined below.

Further, the invention relates to a novel phosphazene compound represented by the general formula (2): 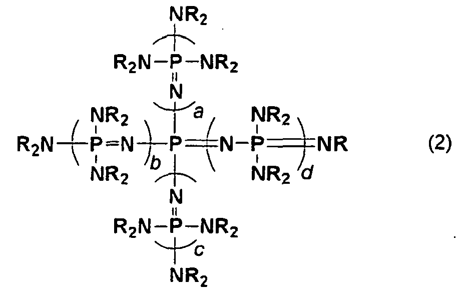 (wherein a, b, c and d represent a positive integer of 3 or less, respectively. R's are the same or different hydrocarbon groups having 1 to 10 carbon atoms and two R's located on each common nitrogen atom optionally bind to each other to form a ring structure.);
a novel phosphazene compound represented by the general 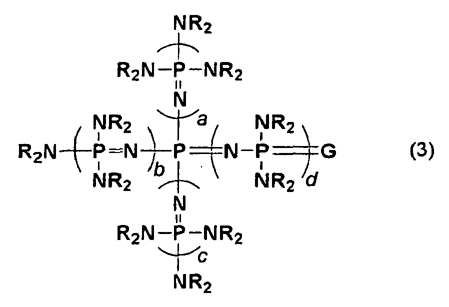 (wherein a, b, c and d are each a positive integer of 3 or less. G is an oxygen atom or a sulfur atom. R's are the same or different hydrocarbon groups having 1 to 10 carbon atoms and two R's located on each common nitrogen atom optionally bind to each other to form a ring structure.);
a novel phosphazenium salt represented by the general formula (4): 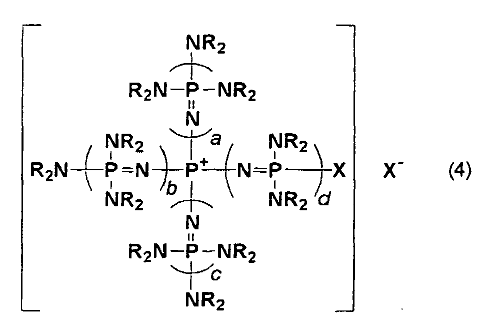 (wherein a, b, c and d are each a positive integer of 3 or less. R's represent the same or different hydrocarbon groups having 1 to 10 carbon atoms and two R's located on each common nitrogen atom optionally bind may to each other to form a ring structure. X is a halogen atom, and X⁻ is an anion of a halogen atom which is the same or different from X); and
a novel phosphazenium salt represented by the general formula (5): 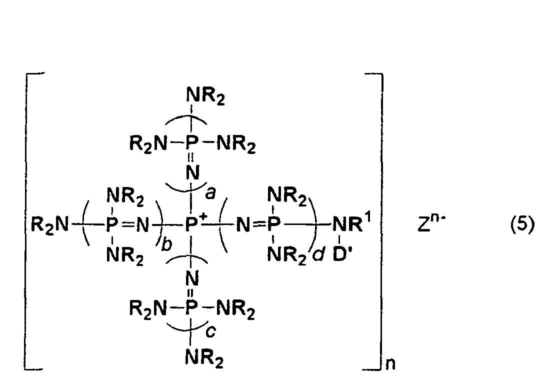 (wherein n is an integer of 1 to 8 and represents the number of phosphazenium cations, and Zⁿ⁻ is an anion of an active hydrogen compound in a form derived by releasing n protons from an active hydrogen compound having a maximum of 8 active hydrogen atoms as defined below. a, b, c and d are each a positive integer of 3 or less. R's represent the same or different hydrocarbon groups having 1 to 10 carbon atoms and two R's located on each common nitrogen atom optionally bind to each other to form a ring structure. R¹ is a hydrogen atom or a hydrocarbon group having 1 to 10 carbon atoms. D' is a monovalent group having a heteroatom which is bonded to N with the proviso that it is other than a hydrogen atom and a saturated hydrocarbon group.), which are useful for producing the supported catalyst.

The invention also relates to a novel phosphazenium salt represented by the general formula (6): 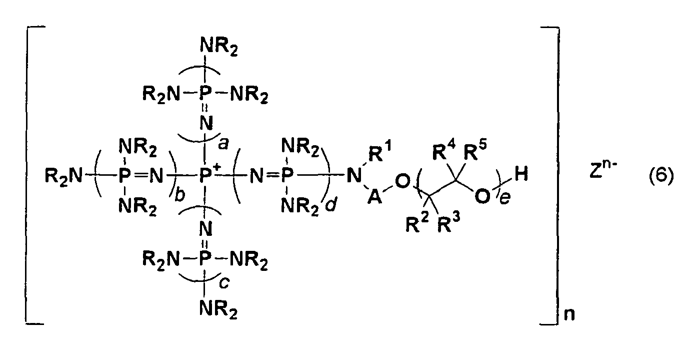 (wherein n is an integer of 1 to 8 and represents the number of phosphazenium cations, and Zⁿ⁻ is an anion of an active hydrogen compound in a form derived by releasing n protons from an active hydrogen compound having a maximum of 8 active hydrogen atoms as defined below. a, b, c and d are each a positive integer of 3 or less. R's represent the same or different hydrocarbon groups having 1 to 10 carbon atoms and two R's located on each common nitrogen atom optionally bind to each other to form a ring structure. A is a hydrocarbon group having 1 to 20 carbon atoms. Further, R¹ is a hydrogen atom or a hydrocarbon group having 1 to 10 carbon atoms. R², R³, R⁴ and R⁵ are each a hydrogen atom or a hydrocarbon group having 1 to 8 carbon atoms. e is 0 to 200.) as one preferable embodiment of the phosphazenium salt represented by the general formula (5);
a novel phosphazenium salt represented by the general formula (7): 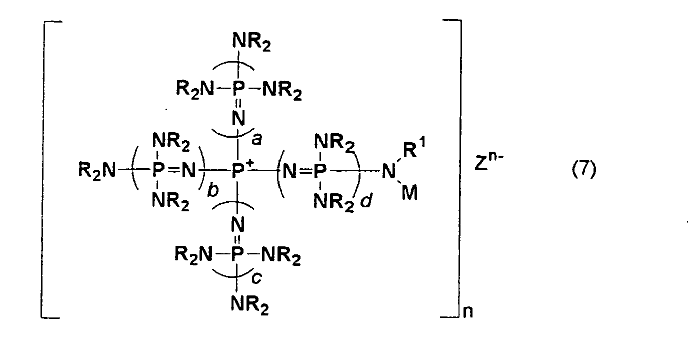 (wherein n is an integer of 1 to 8 and represents the number of phosphazenium cations, and Zⁿ⁻ is an anion of an active hydrogen compound in a form derived by releasing n protons from an active hydrogen compound having a maximum of 8 active hydrogen atoms as defined below. a, b, c and d are each a positive integer of 3 or less. R's represent the same or different hydrocarbon groups having 1 to 10 carbon atoms and two R's located on each common nitrogen atom optionally bind to each other to form a ring structure. R¹ is a hydrogen atom or a hydrocarbon group having 1 to 10 carbon atoms. M is a group having a carbon-carbon unsaturated bond) as another preferable embodiment of the phosphazenium salt represented by the general formula (5); and
a novel phosphazenium salt represented by the general formula (8): 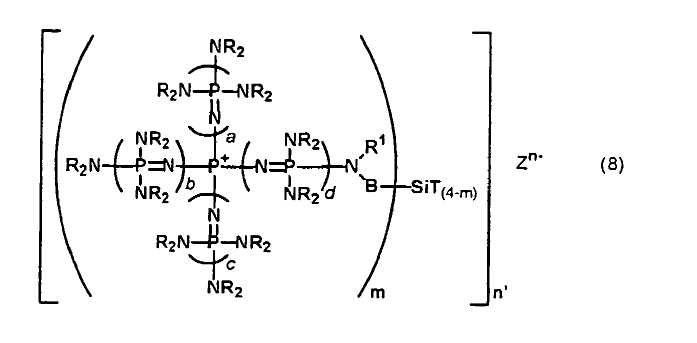 (wherein m is an integer of 1 to 3 and represents the number of phosphazenium cations bonded to a silicon atom, n' is an integer of 1 to 8 and represents the number of silicon compounds to which phosphazenium cations are bonded, n is a multiplier of m and n', and Zⁿ⁻ is an anion of an active hydrogen compound in a form derived by releasing n protons from an active hydrogen compound having a maximum of 24 active hydrogen atoms as defined below. a, b, c and d are each a positive integer of 3 or less. R's represent the same or different hydrocarbon groups having 1 to 10 carbon atoms and two R's located on each common nitrogen atom optionally bind to each other to form a ring structure. B is a hydrocarbon group having 1 to 20 carbon atoms. Further, R¹ is a hydrogen atom or a hydrocarbon group having 1 to 10 carbon atoms. T is a functional group in which a Si-T bond can be broken by hydrolysis and is selected from the group consisting of a halogen atom and an alkoxy group.) as a preferable embodiment of the phosphazenium salt represented by the general formula (5).

The invention also relates to a method for producing certain compounds in which the supported catalyst is used, as defined in claims 9 to 11 and described below.

The phosphazene-supported catalyst according to the present invention is highly effective in proceeding various organic reactions and further has no reduction in activity even after recovery and reuse of the catalyst, and thus this can be effectively reused and this is also economically advantageous. Further, the phosphazene compound and the phosphazenium salt of the invention are not only intermediates which can easily provide the supported catalyst of the invention as described above, but also catalysts which are useful themselves for proceeding various organic reactions.

### DESCRIPTION OF THE EMBODIMENTS

Hereinafter, the invention will be described in detail.

In the general formulae (1) to (8), R's represent the same or different hydrocarbon groups having 1 to 10 carbon atoms. The hydrocarbon group represented by R is not particularly limited and may be an aliphatic hydrocarbon group or an aromatic hydrocarbon group. The aliphatic hydrocarbon group includes, for example, an alkyl group having 1 to 10 carbon atoms, such as methyl, ethyl, and propyl; an alkenyl group having 2 to 10 carbon atoms, such as vinyl and allyl; an alkynyl group having 2 to 10 carbon atoms, such as ethynyl and propynyl, and the aromatic hydrocarbon group includes, for example, an aryl group having 6 to 10 carbon atoms, such as phenyl and naphthyl; and an aralkyl group having 7 to 10 carbon atoms such as, benzyl and phenethyl. R is preferably an aliphatic hydrocarbon group, and more preferably a methyl group and an ethyl group.

In the general formulae (1) to (8), two R's located on each common nitrogen atom optionally bind to each other to form a ring structure. The group formed by combining two R's located on each common nitrogen atom with each other includes, for example, an alkylene group having 2 to 10 carbon atoms, such as ethylene, tetramethylene, and pentamethylene; a cycloalkylene group having 3 to 10 carbon atoms, such as cyclohexylene; an alkenylene group having 2 to 10 carbon atoms, such as vinylene; a cycloalkenylene group having 3 to 10 carbon atoms, such as cyclohexenylene; an arylene group having 6 to 20 carbon atoms, such as phenylene and naphthylene; and an aralkylene group having 8 to 20 carbon atoms, such as phenylethylene. Among these, preferred are tetramethylene and pentamethylene. Such ring structure may be formed by a portion or the whole of each common nitrogen atom to which two R's are bonded.

In the general formulae (1) to (8), a, b, c and d are each a positive integer of 3 or less. They are preferably a positive integer of 2 or less, and a preferred combination of a, b, c and d includes (2,1,1,1) and (1,1,1,1) regardless of the order of a, b, c and d, and particularly preferred combination is (1,1,1,1).

In the general formulae (1) (5), (6), (7) and (8), R¹ is a hydrogen atom or a hydrocarbon group having 1 to 10 carbon atoms. The hydrocarbon group represented by R¹ is not particularly limited and may be an aliphatic hydrocarbon group or an aromatic hydrocarbon group. The aliphatic hydrocarbon group and aromatic hydrocarbon group include the same specific examples as enumerated above for R of the general formulae (1) to (8). R¹ is preferably an aliphatic hydrocarbon group, and more preferably a methyl group or an ethyl group.

In the general formula (1), D is a direct bond or a divalent group that binds the catalyst to a support. The divalent group represented by D can bind a nitrogen atom in the phosphazenium cation to the support and is a hydrocarbon group that optionally has a heteroatom selected from the group consisting of an oxygen atom, a sulfur atom, a nitrogen atom and a silicon atom.

D binds to a nitrogen atom of the phosphazenium cations via a carbon atom or binds to a nitrogen atom of the phosphazenium cations via a heteroatom. However, it is preferable that it binds to a nitrogen atom of the phosphazenium cations via a carbon atom in consideration of bond strength.

The distance between the nitrogen atom contained in phosphazenium cations and the support is not particularly limited. However, the number of the atoms composing the main chain of D depends on the size of the support, but it is generally 1 to 600, and from the viewpoint of increasing the catalyst concentration of the supported catalyst, it is preferably 1 to 300, and more preferably 1 to 100.

In addition, from the viewpoint of production, it is preferable that the phosphazene compounds (2) and (3), the phosphazenium salts (4), (5), (6), (7) and (8), which are useful for preparing the supported catalyst of the invention, or a compound which has further a reactive group connected to these are reacted with a support which has been preliminarily introduced with a functional group capable of reacting with the above ones under the mild conditions to form D. In the case of production of such the production method, their binding sites are a bond containing a heteroatom, usually an oxygen atom, a nitrogen atom, a sulfur atom or the like, such as ether, ester, thioether, thioester, amine, amide or the like.

Further, for example, as one example, it may be preferable that the phosphazenium salt (7) useful for preparing the supported catalyst of the invention and a compound containing a polymerizable functional group are polymerized, or the phosphazenium salt (8) and a silicon compound containing a hydrolyzable group such as alkoxysilane and the like are polymerized to synthesize a support and simultaneously form D.

The divalent group represented by D is, a hydrocarbon group that optionally has a heteroatom selected from an oxygen atom, a sulfur atom, a nitrogen atom and a silicon atom, specifically e.g. an alkylene group having 1 to 50 carbon atoms such as methylene, ethylene, 1,2-dimethylethylene and pentamethylene; a cycloalkylene group having 3 to 50 carbon atoms such as cyclohexylene; an alkenylene group having 2 to 50 carbon atoms such as vinylene and propenylene; a cycloalkenylene group having 3 to 50 carbon atoms such as cyclohexenylene; an arylene group having 6 to 100 carbon atoms such as phenylene and naphthylene; an aralkylene group having 7 to 100 carbon atoms such as phenylmethylene; a hydrocarbon group comprising a combination of a hydrocarbon group such as phenylenemethylene; those in which a portion of the hydrogen atoms of the above hydrocarbon group is substituted by a heteroatom such as an oxygen atom, a nitrogen atom, a sulfur atom and a silicon atom, or a hydrocarbon group comprising the above heteroatom; those in which a portion of the carbon atoms of the above hydrocarbon group are substituted by a heteroatom such as an oxygen atom, a nitrogen atom, a sulfur atom and a silicon atom, for example, an alkylenedioxy group having 1 to 50 carbon atoms such as tetramethylenedioxy; a cycloalkylenedioxy group having 3 to 50 carbon atoms such as cyclohexylenedioxy; an alkylenedithio group having 1 to 50 carbon atoms such as tetramethylenedithio; an alkylenediamino group having 1 to 50 carbon atoms such as N,N-dimethyl tetramethylenediamino; an arylenedioxy group having 6 to 100 carbon atoms such as phenylenedioxy; and a divalent group represented by the following general formula (10) : 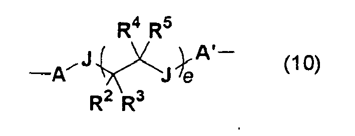 (wherein A is a hydrocarbon group having 1 to 20 carbon atoms . R², R³, R⁴, and R⁵ are a hydrogen atom or a hydrocarbon group having 1 to 8 carbon atoms. J's are an oxygen atom, a sulfur atom or NR⁶, which may be the same or different, and R⁶ is a hydrogen atom or a hydrocarbon group having 1 to 8 carbon atoms. A' is a direct bond or a hydrocarbon group having 1 to 20 carbon atoms. e is from 0 to 200.). In addition, the specific descriptions on A, R², R³, R⁴, R⁵ and e are the same as in the general formula (6) as described below. R⁶ is the same as for R² to R⁵. The hydrocarbon group represented by A' is not particularly limited and may be an aliphatic hydrocarbon group or an aromatic hydrocarbon group. Specific examples of the aliphatic hydrocarbon group and the aromatic hydrocarbon group are the same as for A in the general formula (6) as described below.

Furthermore, as the divalent group represented by the above-described D, the hydrocarbon group which may contain a hetero atom such as an oxygen atom, a sulfur atom, a nitrogen atom and a silicon atom, may have a structure of a phosphazenium salt represented by the following the general formula (11): 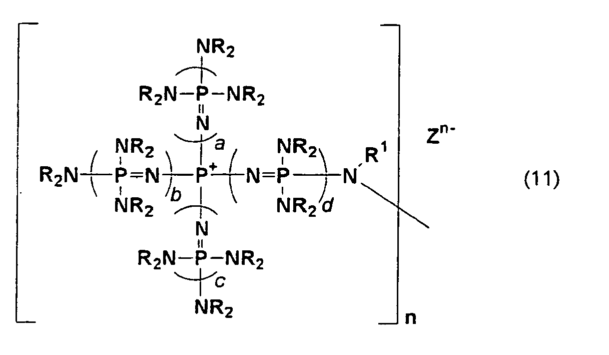 (wherein n, Zⁿ⁻, a, b, c, d, R and R¹ have the same meanings as in the general formula (1).).

D is preferably the divalent group represented by the general formula (10) and more preferably the group in which J is oxygen and e is from 0 to 30.

In the general formulae (1), (5), (6), (7) and (8), Zⁿ⁻ is an anion of an active hydrogen compound in a form derived by releasing n protons from an active hydrogen compound having a maximum of 8 active hydrogen atoms (the general formulae (1), (5), (6) and (7)) or a maximum of 24 active hydrogen atoms (the general formula (8)).

The active hydrogen compound giving Zⁿ⁻ is selected from the group of compounds having an active hydrogen atom on an oxygen atom, a nitrogen atom or a sulfur atom, and inorganic acids.

Among the compounds from which Zⁿ⁻ is derived, the compound which has an active hydrogen atom on an oxygen atom includes, for example, water; carboxylic acids such as monocarboxylic acids having 1 to 20 carbon atoms and polyvalent carboxylic acids having 2 to 20 carbon atoms, which contain 2 to 6 carboxyl groups; carbamic acids having 1 to 20 carbon atoms; sulfonic acids having 1 to 20 carbon atoms; alcohols such as monohydric alcohols having 1 to 20 carbon atoms and polyhydric alcohols having 2 to 20 carbon atoms, which contain 2 to 8 hydroxyl groups; phenols having 6 to 20 carbon atoms, which contain 1 to 3 hydroxyl groups; saccharides or derivatives thereof; and polyalkylene oxides having active hydrogen at their terminals.

The monocarboxylic acids having 1 to 20 carbon atoms include, for example, aliphatic monocarboxylic acids such as formic acid, acetic acid, trifluoroacetic acid, stearic acid and oleic acid; aliphatic monocarboxylic acids containing an aromatic ring such as phenylacetic acid; alicyclic monocarboxylic acids such as cyclohexanecarboxylic acid; and aromatic monocarboxylic acids such as benzoic acid and 2-carboxynaphthalene.

The polyvalent carboxylic acids having 2 to 20 carbon atoms, which contain 2 to 6 carboxyl groups include, for example, aliphatic polyvalent carboxylic acids such as oxalic acid and malonic acid; and aromatic polyvalent carboxylic acids such as phthalic acid and trimellitic acid.

The carbamic acids having 1 to 20 carbon atoms include, for example, N,N-diethylcarbamic acid, N-carboxyaniline, and N,N'-dicarboxy-2,4-toluenediamine. The sulfonic acid having 1 to 20 carbon atoms includes, for example, aliphatic sulfonic acids such as methanesulfonic acid and trifluoromethanesulfonic acid; aliphatic sulfonic acids containing heterocycles such as 2-morpholinoethanesulfonic acid and 3-(N-morpholino)propanesulfonic acid; aromatic sulfonic acids such as benzenesulfonic acid, p-toluenesulfonic acid, 4-nitrobenzenesulfonic acid, 4,4'-biphenyldisulfonic acid, 2-naphthalenesulfonic acid and picrylsulfonic acid; and heterocyclic sulfonic acids such as 3-pyridinesulfonic acid.

The monohydric alcohols having 1 to 20 carbon atoms include, for example, aliphatic monohydric alcohols such as methanol, allyl alcohol and crotyl alcohol; alicyclic monohydric alcohols such as cyclopentanol; and aliphatic monohydric alcohols containing an aromatic ring such as benzyl alcohol. The polyhydric alcohols having 2 to 20 carbon atoms, which contain 2 to 8 hydroxyl groups include, for example, aliphatic polyhydric alcohols such as ethylene glycol, propylene glycol, diethylene glycol, butanediol, trimethylolpropane, glycerin, diglycerol and pentaerythritol; and alicyclic polyhydric alcohols such as 1,4-cyclohexanediol.

The phenols having 6 to 20 carbon atoms, which contain 1 to 3 hydroxyl groups include, for example, monovalent phenols such as phenol, cresol, nitrophenol, chlorophenol, naphthol, anthrarobin, 9-phenanthrol and 1-hydroxypyrene; and divalent phenols such as catechol, dihydroxynaphthalene and bisphenol A. The saccharides or derivatives thereof include, for example, saccharides such as glucose, sorbitol, dextrose, fructose and sucrose, or derivatives thereof; and the like. The polyalkylene oxides having active hydrogen at their terminals include, for example, polyethylene oxide, polypropylene oxide, and polyalkylene oxides, which are copolymers of such oxides, having a number average molecular weight of 100 to 50000 and having 2 to 8 terminals and 1 to 8 hydroxyl groups at the terminals.

Among the compounds from which Zⁿ⁻ is derived, an active hydrogen compound which has an active hydrogen atom on a nitrogen atom includes, for example, ammonia; amines such as primary amines having 1 to 20 carbon atoms, secondary amines having 2 to 20 carbon atoms, polyvalent amines having 2 to 20 carbon atoms, which contain 2 or 3 primary or secondary amino groups, saturated cyclic secondary amines having 4 to 20 carbon atoms, unsaturated cyclic secondary amines having 4 to 20 carbon atoms, and cyclic polyvalent amines having 4 to 20 carbon atoms, which contain 2 or 3 secondary amino groups; and amides such as unsubstituted or N-monosubstituted acid amides having 2 to 20 carbon atoms, cyclic amides of 5- to 7-membered rings and imides of dicarboxylic acid having 4 to 10 carbon atoms.

The primary amines having 1 to 20 carbon atoms include, for example, aliphatic primary amines such as methylamine, ethylamine and propylamine; alicyclic primary amines such as cyclohexylamine; aliphatic primary amines containing an aromatic ring such as benzylamine and β-phenylethylamine; and aromatic primary amines such as aniline and toluidine.

The secondary amines having 2 to 20 carbon atoms include, for example, aliphatic secondary amines such as dimethylamine, methylethylamine and dipropylamine; alicyclic secondary amines such as dicyclohexylamine; and aromatic secondary amines such as N-methylaniline and diphenylamine. The polyvalent amines having 2 to 20 carbon atoms, which contain 2 or 3 primary or secondary amino groups, include, for example, ethylenediamine, di(2-aminoethyl)amine, hexamethylenediamine, tri(2-aminoethyl)amine, and N,N'-dimethylethylenediamine. The saturated cyclic secondary amines having 4 to 20 carbon atoms include, for example, pyrrolidine, piperidine, morpholine, and 1,2,3,4-tetrahydroquinoline. The unsaturated cyclic secondary amines having 4 to 20 carbon atoms include, for example, 3-pyrroline, pyrrole, indole, carbazole, imidazole, pyrazole, and purine.

The cyclic polyvalent amines having 4 to 20 carbon atoms, which contain 2 or 3 secondary amino groups, include, for example, piperazine, pyrazine, and 1,4,7-triazacyclononane. The unsubstituted or N-monosubstituted acid amides having 2 to 20 carbon atoms include, for example, acetamide, N-methylpropionamide, N-methylbenzoic acid amide, and N-ethylstearic acid amide. The cyclic amides of 5- to 7-membered rings include, for example, 2-pyrrolidone and ε-caprolactam. The imides of dicarboxylic acids having 4 to 10 carbon atoms, include, for example, succinic acid imide, maleic acid imide, and phthalimide.

Among the compounds from which Zⁿ⁻ is derived, an active hydrogen compound which has an active hydrogen atom on a sulfur atom include, for example, hydrogen sulfide; thioalcohols such as monohydric thioalcohols having 1 to 20 carbon atoms and polyhydric thioalcohols having 2 to 20 carbon atoms; and thiophenols having 6 to 20 carbon atoms. The monohydric thioalcohols having 1 to 20 carbon atoms include, for example, aliphatic monohydric thioalcohols such as methanethiol, ethanethiol and allyl mercaptan; aliphatic monohydric thioalcohols containing an aromatic ring such as benzyl mercaptan; and alicyclic monohydric thioalcohols such as cyclopentyl mercaptan and cyclohexyl mercaptan. The polyhydric thioalcohols having 2 to 20 carbon atoms include, for example, 1,2-ethanedithiol, 1,3-propanedithiol, 1,2,3-propanetrithiol, and 2,3-di(mercaptomethyl)-1,4-butanedithiol.

The thiophenols having 6 to 20 carbon atoms include, for example, monohydric thiophenols such as thiophenol, thiocresol and thionaphthol; and dihydric thiophenols such as 1,2-benzenedithiol.

Among the compounds from which Zⁿ⁻ is derived, the inorganic acids include hydrogen halides such as hydrogen fluoride, hydrogen chloride, hydrogen bromide, hydrogen iodide; boric acid, tetrafluoroboric acid, phosphoric acid, phosphorous acid, hexafluorophosphoric acid, hydrogen cyanide, thiocyanic acid, nitric acid, sulfuric acid, carbonic acid, and perchloric acid.

Among the active hydrogen compounds, preferred are the above-described inorganic acids and the above-described active hydrogen compounds having an active hydrogen atom on an oxygen atom, and more preferred are the above-described hydrogen halides, aliphatic monohydric alcohols, alicyclic monohydric alcohols, aliphatic monohydric alcohols containing an aromatic ring, aliphatic polyhydric alcohols, alicyclic polyhydric alcohols, saccharides or derivatives thereof, polyethylene oxide, polypropylene oxide, or polyalkylene oxides, which are copolymers of such oxides, having a number average molecular weight of 100 to 50000 and having 2 to 8 terminals and 1 to 8 hydroxyl groups at the terminals.

For Zⁿ⁻, anions may be suitably selected according to the reactions since preferable anions vary depending on the types of the reactions which use the catalyst of the invention. For example, for polymerization of cyclic monomers such as alkylene oxide and the like, preferred are the anions derived by releasing the active hydrogen from the compound having active hydrogen on an oxygen atom, and for alkylation of a phenolic hydroxyl group, preferred are anions of halogen atoms.

In the general formulae (1), (5), (6) and (7), n represents the number of phosphazenium cations, as well as the number of protons released from the active hydrogen compound having a maximum of 8 active hydrogen atoms. n is an integer of 1 to 8, and preferably an integer of 1 to 3. In addition, as specific examples of the phosphazene skeleton represented by the general formula (1), various ones are disclosed in JP-A No. 10-77289, JP-A No. 2000-355606, JP-A No. 2004-107266 and the like, in which the invention can be applied to such known phosphazene skeleton.

In the general formula (8), m represents the number of phosphazenium cations bonded to silicon. m is an integer of 1 to 3. Further, n' represents the number of the silicon compounds to which a group having a phosphazenium cation skeleton is bonded. n' is an integer of 1 to 8, and preferably an integer of 1 to 3. Further, n is a multiplier of m and n', and represents the total number of phosphazenium cations and the numbers of the protons released from the active hydrogen compound having a maximum of 24 active hydrogen atoms. n is an integer of 1 to 24, and preferably an integer of 1 to 9.

In the general formula (4), X is a halogen atom, and X⁻ is an anion of the halogen atom. The halogen atom represented by X includes, for example, a fluorine atom, a chlorine atom, and a bromine atom, but among these, preferred are the chlorine atom and the bromine atom. The anion of the halogen atom represented by X⁻ includes, for example, anions of a fluorine atom, a chlorine atom, and a bromine atom, but among these, preferred are anions of the chlorine atom and the bromine atom. X⁻ is an anion of the halogen atom which is the same as X, or is an anion of the halogen atom which is different from X.

In the general formula (5), D' is a monovalent hydrocarbon group having a heteroatom bonded to N (with the proviso that a hydrogen atom and a saturated hydrocarbon group are excluded). The monovalent group represented by D' is not particularly limited as long as it is a group other than a hydrogen atom and a saturated hydrocarbon group, which is capable of bonding to the nitrogen atom contained in the phosphazenium cation. D' includes, for example, a hydrocarbon group having a heteroatom such as an oxygen atom, a sulfur atom, a nitrogen atom and a silicon atom, and a group having a reactive functional group containing a carbon-carbon unsaturated bond or the like, and it may be, among these which are exemplified as to the above described D, ones in which one binding site of a hydrocarbon group having a heteroatom is blocked by hydrogen, a halogen atom, silicon and the like.

Preferable embodiments of the general formula (5) are described below.

### (i) Phosphazenium salt in which D' is a monovalent group represented by the following general formula (12):

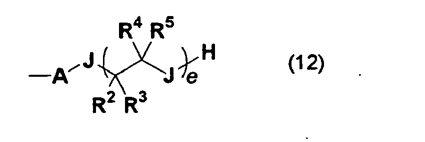

(wherein A, R², R³, R⁴, R⁵, J and e are the same meaning as in the above described general formula (10)) in the hydrocarbon group having a heteroatom such as an oxygen atom, a sulfur atom, a nitrogen atom and a silicon atom. In addition, specific descriptions on A, R², R³, R⁴, R⁵ and e are the same as in the general formula (6) as described below. When J is NR⁶, R⁶ is the same as R² to R⁵.

### (ii) Phosphazenium salt represented by the general formula (6)

In the general formula (6), A is a hydrocarbon group having 1 to 20 carbon atoms. The hydrocarbon group having 1 to 20 carbon atoms represented by A may be an aliphatic hydrocarbon group or an aromatic hydrocarbon group as long as it is a divalent hydrocarbon group. The divalent hydrocarbon group includes, for example, an alkylene group having 1 to 20 carbon atoms such as methylene, ethylene, trimethylene and methylethylene; a cycloalkylene group having 3 to 20 carbon atoms such as cyclohexylene; an alkenylene group having 2 to 20 carbon atoms such as vinylene and propenylene; a cycloalkenylene group having 3 to 20 carbon atoms such as cyclohexenylene; an arylene group having 6 to 20 carbon atoms such as phenylene and naphthylene; an aralkylene group having 7 to 20 carbon atoms such as phenylmethylene; and a group comprising a combination of these groups such as phenylenemethylene and xylylene. Among these, preferred are an alkylene group, an arylene group, an aralkylene group and a group comprising a combination of these groups, and more preferred are a methylene group, an ethylene group, a phenylene group and a xylylene group.

In the general formula (6), R², R³, R⁴ and R⁵ are a hydrogen atom or a hydrocarbon group having 1 to 8 carbon atoms. The hydrocarbon group represented by R², R³, R⁴ and R⁵ may be an aliphatic hydrocarbon group or an aromatic hydrocarbon group. The aliphatic hydrocarbon group and the aromatic hydrocarbon group include, for example, among specific examples of R and R¹ in the general formulae (1) to (6), those having 1 to 8 carbon atoms. R², R³, R⁴ and R⁵ are preferably hydrogen or an aliphatic hydrocarbon group, and more preferably hydrogen or a methyl group. In the general formula (6), e is from 0 to 200. Preferably, e is from 0 to 100, and more preferably 0 to 30.

### (iii) Phosphazenium salt represented by the general formula (7)

In the general formula (7), M is a group having a carbon-carbon unsaturated bond. Such the group is not particularly limited as long as it has a carbon-carbon unsaturated bond, and it includes, for example, an aliphatic hydrocarbon group having a carbon-carbon unsaturated bond, including an alkenyl group such as vinyl, crotyl and allyl and an alkynyl group such as ethynyl and propynyl; an aromatic hydrocarbon group having a carbon-carbon unsaturated bond, including styryl, vinylbenzyl and styrylethyl; a group having a carbon-carbon unsaturated bond and a carbonyl group, such as an acryl group, a methacryl group, a cinnamyl group and acetylene carbonyl group. In addition, it includes a group to which a hydrocarbon group or the like is further bonded to the above-mentioned groups. Among these, preferred is a group having a carbon-carbon double bond, such as vinyl, crotyl, allyl, styryl, vinylbenzyl, styrylethyl, acryl, methacryl or a group to which a hydrocarbon group or the like is further bonded to the above-mentioned groups, and more preferred is a group having a carbon-carbon double bond at its terminal, such as vinyl, allyl, styryl, vinylbenzyl, styrylethyl, acryl, methacryl or a group in which a hydrocarbon group or the like is further bonded to the above-mentioned groups.

### (iv) Phosphazenium salt represented by the general formula (8)

In a general formula (8), B is a hydrocarbon group having 1 to 20 carbon atoms. The hydrocarbon group having 1 to 20 carbon atoms represented by B is a divalent hydrocarbon group, and it may be an aliphatic hydrocarbon group or an aromatic hydrocarbon group. The divalent hydrocarbon group includes, for example, an alkylene group having 1 to 20 carbon atoms such as methylene, ethylene, trimethylene and methylethylene; a cycloalkylene group having 3 to 20 carbon atoms such as cyclohexylene; an alkenylene group having 2 to 20 carbon atoms such as vinylene and propenylene; a cycloalkenylene group having 3 to 20 carbon atoms such as cyclohexenylene; an arylene group having 6 to 20 carbon atoms such as phenylene and naphthylene; an aralkylene group having 7 to 20 carbon atoms such as phenylmethylene; and a group comprising a combination of these groups such as phenylenemethylene and xylylene. Among these, preferred are an alkylene group, an arylene group, an aralkylene group and a group comprising a combination of these groups, and more preferred are a methylene group, an ethylene group, a phenylene group, and a xylylene group. In addition, T is a functional group in which a Si-T bond can be broken by hydrolysis, and it includes, for example, a halogen atom such as F, Cl, Br and I, or an alkoxy group such as a methoxy group, an ethoxy group, a propoxy group and a butoxy group.

Hereinbelow, the phosphazene-supported catalyst of the invention which has the group represented by the general formula (1) bonded to the support, is described in more detail by explaining the production method thereof.

As to the phosphazene-supported catalyst of the invention, the support to which the group represented by the general formula (1) bonds is not particularly limited as long as it is insoluble in the reaction solvent used, and any one which contains a group capable of bonding to the group represented by the general formula (1) can be used.

As such the supports, various ones are known and, for example, various kinds of such supports are described at pages 133 to 163 in "Catalyst Lecture Vol. 10 (Industrial Catalyst Reaction 4) Detailed Exposition on Catalyst", Catalyst Institute Ed. First release, Kodansha (1986). Specifically, an inorganic support, which is typified by metal oxides such as SiO₂ Al₂O₃, MgO, TiO₂, SnO₂, ZnO and ZrO₂; complex metal oxides such as SiO₂-Al₂O₃, SiO₂-MgO, SiO₂-ZrO₂ and zeolite; a metal salt of a solid acid such as a metal salt of heteropoly acid and a metal salt of a solid phosphoric acid, a layered compound such as mica and montmorillonite; and clay mineral such as diatomaceous earth; an organic polymer support, which is typified by an organic polymer in which the main chain such as polystyrene, polyvinyl pyridine, polybutadiene and polyvinyl chloride is a carbon-carbon bond; an organic polymer containing oxygen in its main chain such as polyacrylic acid and poly(metha)acrylate; an organic polymer containing nitrogen in its main chain such as polyamide, polyurethane and polyimide; an organic polymer containing silicon in its main chain such as polysiloxane and polysilane; and an organic polymer containing sulfur in its main chain such as polysulfide and polysulfone; and a crosslinked organic polymer support typified by the polymers in which the above-described organic polymer support has an appropriate crosslinked structure. Among such supports, preferred is a support such as metal oxide, an organic polymer in which its main chain is a carbon-carbon bond, a crosslinked organic polymer in which its main chain is a carbon-carbon bond, and more preferred are SiO₂, crosslinked and non-crosslinked polystyrene, and crosslinked and non-crosslinked polyethylene. The support is used in which a group capable of bonding to a group represented by the general formula (1) in the invention is introduced to such the support. As to a method to introduce these groups into the support, various examples are shown at pages 136 to 137, and pages 149 to 150 of the literature, as exemplified by a method in which a hydroxyl group is reacted with SOCl₂ on the surface of SiO₂, and substituted by chlorine and then introduced, a method in which SiO₂, the hydroxyl group on its surface is chloridized, is reacted with phenyllithium, and then substituted for a phenyl group, which is chloromethylated and introduced, a method in which polystyrene is chloromethylated and introduced, and the like. Further, mention may be also made of a method wherein alkoxysilane containing a chloromethyl group is used to be subjected to hydrolysis-polycondensation with other alkoxysilane and the like, or introduced into a silanol group in the silica gel by silylation. As an alternative supporting method, a method is used in which using alkoxysilane containing a chloromethyl group, an alkoxysilyl group is allowed to be bonded to synthesize a phosphazenium salt and then the resultant is subjected to hydrolysis-polycondensation with other alkoxysilane and the like, or supported on a silanol group in the silica gel by silylation.

For a specific method for preparing the supported catalyst, first, a phosphazene compound represented by the general formula (2) (hereinafter, referred to as a "phosphazene compound (2)"), a phosphazene compound represented by the general formula (3) (hereinafter, referred to as a "phosphazene compound (3)"), a phosphazenium salt represented by the general formula (4) (hereinafter, referred to as a "phosphazenium salt (4)"), a phosphazenium salt represented by the general formula (5) (hereinafter, referred to as a "phosphazenium salt (5)"), a phosphazenium salt represented by the general formula (6) (hereinafter, referred to as a "phosphazenium salt (6)"), a phosphazenium salt represented by the general formula (7) (hereinafter, referred to as a "phosphazenium salt (7)"), and a phosphazenium salt represented by the general formula (8) (hereinafter, referred to as a "phosphazenium salt (8)"), which are an intermediate useful for preparing the phosphazene-supported catalyst of the invention, are prepared. Accordingly, first, the method for preparing the phosphazene compounds (2) and (3), and the phosphazenium salts (4), (5), (6), (7), and (8) is described below.

The phosphazene compound (2) can be prepared by reacting a phosphazenium salt represented by the following general formula (13), for example, with a compound obtained by substituting hydrogen of an active hydrogen compound with an alkali metal or alkaline earth metal at a relatively higher temperature. 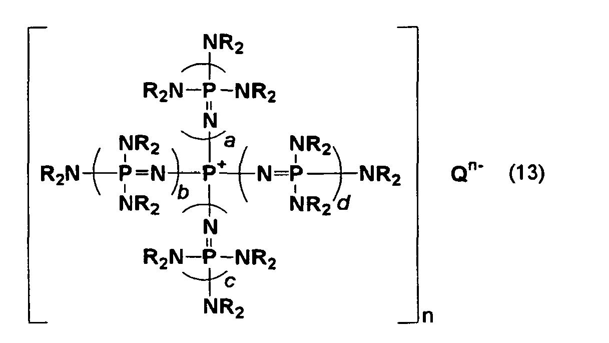 (wherein n is an integer of 1 to 8 and represents the number of phosphazenium cations, Qⁿ⁻ is an anion capable of forming an ion pair with a phosphazenium cation. a, b, c and d are each a positive integer of 3 or less. R's represent the same or different hydrocarbon groups having 1 to 10 carbon atoms and two R's located on each common nitrogen atom may be bonded to each other to form a ring structure.)

Such anion Qⁿ⁻ is not particularly limited, and it may be any one which generates a phosphazene compound represented by the general formula (2). As the phosphazenium salts, the phosphazenium salts disclosed in JP-A No. 10-77289 and JP-A No. 2000-355606, those in which the anions are the anions of halogen atoms such as chlorine, disclosed in "Furka Comprehensive Catalog 1995/96" Furka Fine Chemical and the like are known. Qⁿ⁻ may be any one which does not inhibit the reaction as described below, and may be also inorganic anions.

In the compound obtained by substituting hydrogen of the above-described active hydrogen compound with an alkali metal or alkaline earth metal, the alkali metal or alkaline earth metal includes metallic lithium, metallic sodium, metallic potassium, metallic cesium, metallic magnesium, metallic calcium, metallic strontium, and metallic barium.

The active hydrogen compound includes the active hydrogen compound from which Zⁿ⁻ is derived, and particularly preferred are alcohols, phenols, thioalcohols, thiophenols and amines.

The reaction of a phosphazenium salt represented by the general formula (13) and the compound obtained by substituting hydrogen of the above-described active hydrogen compound with an alkali metal or alkaline earth metal can be conducted by the same method as that for preparing the phosphazenium salt represented by the above-described general formula (9), as disclosed in JP-A No. 10-77289, except that reaction temperature is set to be a relatively higher temperature as described above. Specifically, for example, it can be conducted according to the following conditions.

The used amount of the compound obtained by substituting hydrogen of an active hydrogen compound with an alkali metal or alkaline earth metal, is in a range of usually 1 to 10 equivalents, preferably 1 to 5 equivalents, and more preferably 1 to 2 equivalents, relative to one equivalent of the phosphazenium salt represented by the general formula (13).

The reaction solvent is not particularly limited as long as it does not inhibit the reaction, and any known solvent can be used. Specific examples thereof include aliphatic or aromatic hydrocarbons such as n-hexane, benzene, toluene and tetralin; aliphatic or aromatic halogenated hydrocarbons such as methylene chloride, chloroform and O-dichlorobenzene; ethers such as diethyl ether and tetrahydrofuran; nitriles such as acetonitrile and propionitrile; polar aprotic solvents such as N,N-dimethylformamide, dimethylsulfoxide, sulfolane, hexamethylphosphoric triamide and 1,3-dimethyl-2-imidazolidinone, and these can be used alone or in combination of two or more types.

The reaction temperature can be appropriately controlled depending on the kind, the concentration and the like of the reactant, but it is a relatively higher temperature, in other words, in a range of generally 80 to 300°C, preferably 100 to 250°C, and more particularly 120 to 200°C. The pressure at the time of reaction may be any one of a reduced pressure, a normal pressure and an elevated pressure, but it is in a range of preferably 10 to 500 kPa (absolute pressure; this will hereinafter apply equally), and more preferably 100 to 300 kPa. The reaction time can be appropriately controlled depending on the reaction temperature, the kind of the reaction system and the like, but it is in a range of generally 0.1 to 100 hours, preferably 1 to 50 hours, and more preferably 2 to 20 hours.

Separation of the phosphazene compound (2) from the reaction solution after reaction can be conducted according to a conventional method. For example, a solution containing the phosphazene compound (2) can be obtained by separating the solid content contained in the reaction solution by means of filtration, centrifugation and the like. The solution is concentrated to dryness to obtain the phosphazene compound (2) as a solid. Further, as desired, it can be further purified by recrystallization or the like.

The phosphazene compound (2) obtained as described above can be further reacted with a compound represented by the following formula: X-D' (wherein X is a halogen atom and D' is the same as D' in the general formula (5)) to prepare the phosphazenium salt (5).

For example, the phosphazene compound (2) can be further reacted with the compound represented by the above formula: X-D', which is a compound (a) represented by the following formula: X-E-Y (wherein X is a halogen atom, E is a hydrocarbon group which may contain an oxygen atom, a sulfur atom or a nitrogen atom, Y is a hydroxyl group, a mercapto group or an amino group, which is protected by a protecting group), for example, a compound wherein the protecting group of Y is an alkylsilyl group, to prepare the phosphazenium salt (5) and then to deprotect, thus to obtain a structure having a hydroxyl group, a mercapto group or an amino group, that is, the phosphazenium salt (5) and a phosphazenium salt (6) as a preferred embodiment thereof. Alternatively, according to a known method, the deprotected Y is allowed to react or polymerize with a substituent such as alkylene oxide, or substituted alkylene oxide, oxygen of which is substituted for sulfur, nitrogen and the like, to obtain the phosphazenium salt (5) and the phosphazenium salt (6) as a preferred embodiment thereof, which have a hydroxyl group, a mercapto group or an amino group at its terminal.

The reaction of the phosphazene compound (2) with the compound (a) can be conducted under the following condition. The reaction solvent is the same as in the case of preparing the above-described phosphazene compound (2). The reaction temperature can be appropriately controlled depending on the kind, the concentration and the like of the reactant, but it is in a range of generally -78 to 100°C, preferably -50 to 80°C, and more particularly 0 to 50°C. The pressure at the time of reaction may be any one of a reduced pressure, a normal pressure or an elevated pressure, but it is in a range of preferably 10 to 500 kPa, and more preferably 100 to 300 kPa. The reaction time can be appropriately controlled depending on the reaction temperature, the kind of the reaction system and the like, but it is in a range of generally 0.1 to 100 hours, preferably 1 to 80 hours, and more preferably 2 to 50 hours. The phosphazenium salts (5) and (6) can be separated from the reaction solution by a conventional method. For example, the phosphazenium salts (5) and (6) can be obtained in the solid form or a viscous liquid by separating the solid contents contained in the reaction solution by means of filtration, centrifugation and the like, and then concentrating the filtrate to dryness. It can be further purified by recrystallization, column chromatography and the like, if necessary.

Further, the phosphazene compound (2), for example, can be reacted with the compound represented by the above formula: X-D', which is a compound (a') represented by the following formula: X-L (wherein X is a halogen atom and L is a group having a carbon-carbon unsaturated bond) to obtain the phosphazenium salt (7).

The reaction of the phosphazene compound (2) with the compound (a') can be conducted, for example, under the following condition. The reaction solvent is the same as for the above-described preparation of the phosphazene compound (2). The heating temperature can be appropriately controlled depending on the kind, the concentration and the like of the reactant, but it is in a range of generally -78 to 100°C, preferably -50 to 80°C, and more particularly 0 to 50°C. The pressure at the time of heating may be any one of a reduced pressure, a normal pressure or an elevated pressure, but it is in a range of preferably 10 to 500 kPa, and more preferably 100 to 300 kPa. The reaction time can be appropriately controlled depending on the reaction temperature, the kind of the reaction system and the like, but it is in a range of generally 0.1 to 100 hours, preferably 0.5 to 80 hours, and more preferably 2 to 50 hours. The phosphazenium salt (7) can be separated from the reaction solution by a conventional method. For example, the phosphazenium salt (7) can be obtained in the solid form by separating the solid contents contained in the reaction solution by means of filtration, centrifugation and the like, and then concentrating the filtrate to dryness. It can be further purified by recrystallization, column chromatography and the like, if necessary.

Further, the phosphazene compound (2) can be reacted with the compound represented by the above formula: X-D', which is an organosilicon compound (a") represented by the following formula: X-E'-Y' (wherein X is a halogen atom, E' is a hydrocarbon group, Y' is a silyl group having a hydrolyzable group such as at least one halogen atom or an alkoxy group) to obtain the phosphazenium salt (8) having a silyl group containing a hydrolyzable group bonded thereto.

The reaction of the phosphazene compound (2) with the compound (a") can be conducted, for example, under the following condition. The reaction solvent is the same as for the above-described preparation of the phosphazene compound (2). The reaction temperature can be appropriately controlled depending on the kind, the concentration and the like of the reactant, but it is in a range of generally -78 to 100°C, preferably -50 to 80°C, and more particularly 0 to 50°C. The pressure at the time of heating may be any one of a reduced pressure, a normal pressure or an elevated pressure, but it is in a range of preferably 10 to 500 kPa, and more preferably 100 to 300 kPa. The reaction time can be appropriately controlled depending on the reaction temperature, the kind of the reaction system and the like, but it is in a range of generally 0.1 to 100 hours, preferably 1 to 80 hours, and more preferably 2 to 50 hours. In addition, a non-polar solvent is used as the reaction solvent to produce a high polar reaction product (8), and then remove immediately the product out of the system, thus it being preferable in viewpoint of the reaction mode, simplification of a purification process, improvement in selectivity, and the like, and preferably the reaction mode.

On the other hand, the phosphazene compound (3) can be prepared by heating a phosphazenium salt represented by the general formula (13), wherein the anion is a hydroxyl anion or a mercapto anion, at a temperature higher than room temperature in the presence or absence of a solvent. The heating, for example, can be performed according to the following conditions. The reaction solvent is used as in the case for preparing the phosphazene compound (2). The heating temperature may be appropriately controlled depending on the kind, concentration, or the like of the reactant, but a temperature higher than room temperature may be mentioned, that is, in a range of generally 50 to 300°C, preferably 80 to 250°C, and more preferably 100 to 200°C. The pressure at the time of heating may be any one of reduced, normal or elevated pressure, but it is preferably in a range of 10 to 500 kPa, and more preferably 100 to 300 kPa. The heating time may be appropriately controlled depending on the heating temperature, the kind of the reaction system or the like, but it is in a range of generally 1 to 240 hours, preferably 2 to 200 hours, and more preferably 5 to 150 hours.

Separation of the phosphazene compound (3) from the reaction solution after heating may be performed according to the conventional methods. For example, a solution containing can be obtained by adding aliphatic or aromatic hydrocarbons such as n-pentane, n-hexane, cyclohexane, benzene, toluene, xylene and tetralin to the reactant, and separating the insolubles by filtration, centrifugation or the like. The solution can be concentrated to dryness to obtain the solid phosphazene compound (3) as a solid. Further, purification can also be performed, if necessary, by recrystallization or the like.

The phosphazenium salt (4) can be prepared by reacting the above obtained phosphazene compound (3) with, for example, a halogenating agent such as phosgene, thionyl chloride, thionyl bromide, phosphorus pentachloride, phosphorus trichloride, 2,2-dichloro-1,3-dimethylimidazolidine, 2,2-difluoro-1,3-dimethylimidazolidine. The reaction is performed according to the following conditions.

The content of the halogenating agent is generally in a range of 1 to 10 equivalents, preferably 1 to 5 equivalents, and more preferably 1 to 2 equivalents, based on 1 equivalent of the phosphazene compound (3). The reaction solvent is the same as in the case of preparing the above-described phosphazene compound (2). The reaction temperature may be appropriately controlled depending on the kind, concentration, or the like of the reactant, but it is in a range of generally -78 to 200°C, preferably -50 to 150°C, and more preferably 0 to 100°C. The pressure at the time of reaction may be any one of reduced, normal or elevated pressure, but it is preferably in a range of 10 to 500 kPa, and more preferably 100 to 300 kPa.

The reaction time may be appropriately controlled depending on a reaction temperature, the kind of the reaction system or the like, but it is in a range of generally 0.1 to 300 hours, preferably 0.5 to 200 hours, and more preferably 2 to 150 hours. Separation of the phosphazenium salt (4) from the reaction solution after the reaction may be performed according to the conventional methods. For example, the reaction solution is concentrated to dryness to obtain the phosphazenium salt (4) as a solid. Further, purification can also be performed, if necessary, by recrystallization or the like.

Meanwhile, the phosphazenium salt (4) is reacted with a compound (b) exemplified by a compound having a protective group such as an alkylsilyl group, represented by the following formula: R¹-NH-E-Y (wherein, R¹ represents the same as in the general formulae (1), (5), (6), (7) and (8), E and Y represent the same as in the compound (a).) to prepare the phosphazenium salt (5); then, Y is deprotected to obtain a compound structure having a hydroxyl group, a mercapto group or an amino group, that is, the phosphazenium salt (5) and the phosphazenium salt (6) as a preferred embodiment thereof. Further, the deprotected Y allows the reaction of alkylene oxide or its oxygen with a substituent such as sulfur, nitrogen or the like using a method known widely; or, by allowing polymerization, the phosphazenium salt (5) and the phosphazenium salt (6) as a preferred embodiment thereof can be prepared having the terminals as a hydroxyl group, a mercapto group, an amino group or the like.

The reaction of the phosphazene salt (4) and a compound (b), for example, can be performed according to the following conditions. The reaction solvent is the same as in the case of preparing the above-described phosphazene compound (2). The reaction temperature may be appropriately controlled depending on the kind, concentration, or the like of a reactant, but it is in a range of generally -78 to 200°C, preferably -50 to 150°C, and more preferably 0 to 100°C. The pressure at the time of reaction may be any one of reduced, normal or elevated pressure, but it is preferably in a range of 10 to 500 kPa, and more preferably 100 to 300 kPa. The reaction time may be appropriately controlled depending on a reaction temperature, the kind of the reaction system or the like, but it is in a range of generally 0.1 to 200 hours, preferably 0.5 to 150 hours, and more preferably 2 to 100 hours. Separation of the phosphazenium salt (5) or (6) from the reaction solution may be performed according to the conventional methods. For example, the solid content is separated from the reaction solution by filtration, centrifugation or the like. The solution is concentrated to dryness to obtain the phosphazenium salt (5) or (6) as a solid or viscous liquid. Further, purification can also be performed, if necessary, by recrystallization, column chromatography or the like.

In the phosphazenium salts (5), (6), (7) and (8) prepared by the above, Zⁿ⁻ can be substituted to a desired anion by a method known widely, if necessary. For example, the substitute can be performed by a method of contacting with a compound having a desired anion, particularly, an ion exchange method using an ion-exchange resin having a desired anion or the like, a method for treating with an alkali metal salt or an alkaline earth metal salt having a desired anion, or the like.

A phosphazene-supported catalyst of the invention can be prepared by reacting with a support which has been modified to react with the phosphazene compound (2) or (3) or the phosphazenium salt (4), (5), (6), (7) or (8) with the phosphazene compound (2) or (3) or phosphazenium salt (4), (5), (6), (7) or (8). Particularly, for example, the phosphazene compound (2) or phosphazenium salt (5) or (6) are reacted with a halogenated hydrocarbon residue or the like of the support, whereby being supported to the support, thus enabled the preparation. Further, when using an aminomethylated support as the support, it is possible to obtain the supported catalyst via reacting the phosphazene salt (4) with an aminated hydrocarbon residue. Further, using silica gel as the support, the phosphazenium salt (8) can be silylated with a silanol group which is present on the surface of the silica gel by means of a known method to give a supported catalyst.

The reaction between the phosphazene compound (2) or the phosphazenium salts (4), (5) or (6) and the support is performed, for example, by the following conditions.

The reaction solvent is the same as in the case of preparing the above-described phosphazene compound (2). The reaction temperature may be appropriately controlled depending on the kind, concentration, or the like of a reactant, but it is in a range of generally -78 to 200°C, preferably -50 to 150°C, and more preferably 0 to 100°C. The pressure at the time of reaction may be any one of reduced, normal or elevated pressure, but it is preferably in a range of 10 to 500 kPa, and more preferably 100 to 300 kPa. The reaction time may be appropriately controlled depending on the reaction temperature, the kind of the reaction system or the like, but it is in a range of generally 0.1 to 500 hours, preferably 0.5 to 300 hours, and more preferably 2 to 200 hours. Separation of the phosphazene-supported catalyst from the reaction solution after the reaction may be performed according to the conventional methods. For example, the phosphazene-supported catalyst (1) as a solid contained in the reaction solution is separated by filtration, centrifugation or the like. Further, purification can also be performed, if necessary, by washing with water, an appropriate solvent or the like.

In addition, the reaction of the phosphazenium salt (8) with the support can be conducted, for example, under the following condition.

The phosphazenium salt (8) is supported by bring it in contact with a commercially available silica gel and heating it. At this time, a reaction solvent may be used. The reaction solvent is not particularly limited as long as it is inert to silica gel and the phosphazenium salt (8), but preferred is a non-polar solvent such as benzene, toluene, hexane and the like. The reaction temperature is in a range of generally 0 to 200°C, preferably 20 to 150°C, and more particularly 40 to 120°C. The pressure at the time of reaction may be any one of a reduced pressure, a normal pressure or an elevated pressure, but it is in a range of preferably 10 to 500 kPa, and more preferably 100 to 300 kPa. The reaction time can be appropriately controlled depending on the reaction temperature, the kind of the reaction system and the like, but it is in a range of generally 0.1 to 100 hours, preferably 1 to 50 hours, and more preferably 2 to 20 hours. After separation of silica gel by filtration, if necessary, the resultant is washed with a solvent and the like and then dried to give a phosphazene-supported catalyst.

After the reaction of phosphazene compound (2) or phosphazenium salt (4), (5), (6) or (8) with the support, which is modified with halogenated hydrocarbon residues, aminated hydrocarbon residues or the like, the unreacted halogenated hydrocarbon residues or aminated hydrocarbon residues may be deactivated via a conventional method. For example, the halogenated hydrocarbon residue can be deactivated by treating with an alkali metal alcoholate or an alkaline earth metal alcoholate or the like, thereby substituting a halogen atom with an alkoxy group to form ether. Also, the aminated hydrocarbon residue can be deactivated via substituting with a salt of an alkali metal or alkaline earth metal, and alkylating the amino group with alkyl halide or the like to form tertiary amino structure.

On the other hand, for example, the phosphazenium salt (7) and a polymerizable functional group-containing compound, such as so-called a vinyl monomer such as styrene, (metha)acrylic ester and the like can be polymerized according to a conventional method (e.g., "4th Edition Experimental Chemistry Lecture Vol. 28 (Polymer Synthesis)", The Chemical Society of Japan, Maruzen, 1992, pp. 31 to 38, pp. 120 to 152) to synthesize a support and at the same time to give a phosphazene-supported catalyst.

Further, the phosphazenium salt (8) and other alkoxysilane can be subject to hydrolysis-polycondensation by means of a known method to synthesize a support and at the same time to give a phosphazene-supported catalyst. The present method can be conducted, for example, according to the following condition.

In the supporting method by hydrolysis-polycondensation, alkoxysilane which can form a silica matrix and the phosphazenium salt (8) are made into a homogeneous solution by using a polar solvent such as methanol, ethanol and the like, which is inert to alkoxysilane and water and is watersoluble. To this, hydrochloric acid is added to give an acidic condition, then about 1 equivalent of water based on the hydrolyzable groups is added thereto and the mixture was heated under stirring. The reaction temperature can be appropriately controlled depending on the kind, the concentration and the like of the reactant, but it is in a range of generally 0 to 200°C, preferably 20 to 150°C, and more particularly 40 to 100°C. The pressure at the time of reaction may be any one of a reduced pressure, a normal pressure or an elevated pressure, but it is in a range of preferably 10 to 500 kPa, and more preferably 100 to 300 kPa. The reaction time can be appropriately controlled depending on the reaction temperature, the kind of the reaction system and the like, but it is in a range of generally 0.1 to 100 hours, preferably 1 to 50 hours, and more preferably 2 to 20 hours.

Then, excess water is added to the reaction mixture, and the reaction mixture is gelled immediately by placing it under the basic condition such as ammonia. At this time, continuing heating under the basic condition and aging in a long-term period are effective in viewpoint of improvement in strength of the catalytic structure. The phosphazene-supported catalyst after reaction can be separated by a conventional method. For example, the phosphazene-supported catalyst can be obtained by separation by means of filtration, centrifugation and the like of the solid contents contained in the reaction solution, and further washing with water and drying.

In the phosphazene-supported catalyst prepared by the above, Zⁿ⁻ can be substituted to a desired anion, which is appropriate for the reaction type which uses the catalyst, by a method known widely. For example, the substitute can be performed by a method of contacting with a compound having a desired anion, particularly, an ion exchange method using an ion-exchange resin having a desired anion or the like, a method for treating with an alkali metal salt or an alkaline earth metal salt having a desired anion, or the like.

The phosphazene-supported catalyst prepared by the above is useful as a catalyst for various organic reactions, and particularly, it is useful as a catalyst for the reactions defined in claims 5 to 11.

In addition, the phosphazene compounds (2) and (3) and the phosphazenium salts (4), (5), (6), (7) and (8) of the invention which are useful for preparing the phosphazene-supported catalyst of the invention can be a useful as a catalyst for performing various reactions as themselves.

Further, the phosphazenium cations in the phosphazene-supported catalyst represented by the general formula (1) and in the phosphazenium salts represented by the general formula (4), general formura (5), general formula (6), general formula (7), general formula (8), general formula (9), general formula (11), and general formula (13), have been represented by the limiting structural formulae in each of which the positive charge is localized on the central phosphorus atom. Besides this, a number of limiting structural formulae can be drawn. Actual positive charge is delocalized throughout the entire skeletons, respectively.

Using the phosphazene-supported catalyst of the invention, polymerization of alkylene oxide as an example will be described as below.

Alkylene oxide is not particularly limited, but examples may include epoxy compounds such as ethylene oxide, propylene oxide, 1,2-butylene oxide, 2,3-butylene oxide, styrene oxide, cyclohexene oxide, epichlorohydrin, epibromohydrin, methylglycidyl ether, allylglycidyl ether, phenylglycidyl ether, and these may be used alone or in a mixture of two or more. The content of the phosphazene-supported catalyst provided for polymerization of alkylene oxide is not particularly limited, but is it generally in a range of 1 × 10⁻¹⁵ to 5 × 10⁻¹ mole, and preferably 1 × 10⁻⁷ to 1 × 10⁻² mole.

A method for polymerization of alkylene oxide is not particularly limited, but employing conventional methods shown in, for example, JP-A Nos. 10-77289 and 2000-327769 are preferred. In general, the phosphazene-supported catalyst is added into the reactor together with active hydrides, solvent and the like, if necessary, and byproducts are removed, if necessary. Next, a method of providing a necessary amount of alkylene oxide in a bulk, or a method of providing intermittently or continuously is employed.

By reacting an aromatic compound having at least one hydroxyl group bonded to its aromatic ring with carbonic acid diester in the presence of phosphazene-supported catalyst of the invention, aromatic ethers in which a hydroxyl group in the aromatic compound is etherified can be obtained. For example, by reacting a compound having one hydroxyl group in an aromatic ring such as phenol with carbonic acid dialkylester such as dimethyl carbonate, an aromatic ether which a hydroxyl group of an aromatic compound is substituted with an alkoxy group can be obtained. In the case where an aromatic compound having at least one hydroxyl group bonded thereto its aromatic ring is a compound having a plurality of hydroxyl group, according to the reaction conditions for the reaction with an aromatic ring, a compound having one or a plurality of hydroxyl group being etherified can be obtained.

The above-described aromatic compound and carbonic acid diester which can be used as raw materials are disclosed in JP-A No. 2004-107266. The content of the phosphazene-supported catalyst provided in an alkylation of a phenolic hydroxyl group is not particularly limited, but it is in a range of generally 1 × 10⁻⁷ to 10 mole, based on 1 mole of the phenolic hydroxyl group, and the reaction method is not particularly limited. For example, it is preferable to employ a conventional method shown in JP-A No. 2004-107266. In general, the method is processed by reacting an aromatic compound having at least one hydroxyl group to its aromatic ring with carbonic acid diester in a solvent of the carbonic acid diester. Other solvents may be used, if necessary.

The content of the solvent is not limited, but it can be determined depending on reaction conditions such as the kind and the amount of the aromatic compound having at least one hydroxyl group to its aromatic ring, the kind and the amount of carbonic acid diester, the reaction temperature and the pressure. The conditions of the reaction temperature, the pressure and the like are not particularly limited as long as an aromatic ether is formed by the conditions. The reaction temperature and the pressure are generally 0°C to 250°C and 0.1MPa (1 atm) to 10.1MPa (100 atm). The reaction time is not consistent according to the kind and the amount of the compound having at least one hydroxyl group directly bonded to its aromatic ring, the kind and the amount of carbonic acid diester, the kind and the amount of a catalyst, the reaction temperature, the reaction pressure and the kind and the amount of the solvent used, but it is generally 15 minutes to 100 hours. In the above-described reaction, by using the phosphazene-supported catalyst of the invention as a catalyst, the target product can be very efficiently obtained.

Using the phosphazene-supported catalyst of the invention, the aldol reaction is explained below as an example.

When a carbonyl compound such as aldehyde and ketone functions under a basic condition, so-called an aldol reaction (condensation) occurs, to give a β-hydroxycarbonyl compound or an α,β-unsaturated carbonyl compound.

The amount of the phosphazene-supported catalyst used in the reaction is not particularly limited, but it is in the range of generally 1 × 10⁻⁷ to 10 mol, and preferably 1 × 10⁻³ to 1 mol, based on one mole of the carbonyl compound. The reaction method is not particularly limited, and a known method can be employed. Usually, the carbonyl compound as a reactant is reacted using an inert solvent or the carbonyl compound itself as a solvent in the presence of a catalyst.

The amount of the solvent used is not limited, and it can be appropriately determined depending on the reaction conditions such as the kind and the amount of the carbonyl compound, the reaction temperature, the reaction pressure and the like. The temperature and pressure for reaction are usually -78°C to 250°C, and 0.1MPa (1 atm) to 10.1MPa (100 atm), respectively. The reaction time varies due to the kind and the amount of the carbonyl compound, the kind and the amount of the catalyst, the reaction temperature, the reaction pressure, the kind and the amount of the solvent, and the like, but it is generally 15 minutes to 100 hours. In the above-described reaction, an objective product can be efficiently obtained by using the phosphazene-supported catalyst of the invention as a catalyst.

### [Examples]

The invention will be described in detail with respect to the following examples, but the invention is not limited thereto.

### (Example 1)

Synthesis of 1,1,1-tris{[tris(dimethylamino)phosphoranylidene]amino}-3,3-bis (dimethylamino) -3-methylamino-1λ⁵, 3λ⁵-diphosphazene (hereinafter, abbreviated as PZNB)

Into a 1-L glass flask equipped with a stirrer, which was kept under a nitrogen atmosphere, 54 g of tetrakis[tris(dimethylamino)phosphoranylideneamino]phosphoni um chloride and 13 g of potassium-1-octylthiolate were introduced. 450 ml of tetralin was added thereto to give a suspension. With stirring, the suspension was heated to 185°C over 5 hours, and then cooled to room temperature. The obtained suspension was filtered under a nitrogen atmosphere, and washed with 100 ml of tetralin to yield 531 g of a yellow solution. A portion of the solution was added to benzene-d6 and hexamethylphosphorictriamide was used as an internal standard in performing measurement of ³¹P-NMR. From this, a quintuplet corresponding to 1 atom of phosphorus at -30.3 ppm, a doublet corresponding to 3 atoms of phosphorus at 6.79 ppm, a doublet corresponding to 1 atom of phosphorus at 16.04 ppm were observed, and the concentration of PZNB in the solid was 0.163 mmol/g. Further, 725 of a parent peak corresponding to PZNB were observed by FD-MS analysis. A 62.0 g of pale yellow solid was obtained when the yellow solution was distilled off under reduced pressure. The results of the ³¹P-NMR and FD-MS analysis on the solid were the same as that of the yellow solution.

### (Example 2)

Synthesis of polymer-supported phosphazenium chloride

Into a 1-L glass flask equipped with a stirrer, which was kept under a nitrogen atmosphere, 51 g of chloromethylated polystyrene-based resins (54 mmol in terms of chlorine atoms) (manufactured by Argonaut Technologies, Inc., ArgoPore-Cl, 1.05 mmol-Cl/g) and 430 g of tetralin was added and stirred at room temperature for 1 hour. Then, 343 g of a tetralin solution of PZNB (56 mmol in terms of PZNB) obtained in Example 1 was further added and the mixture was stirred continuously for 4 days. Thus obtained suspension was filtered under a nitrogen atmosphere, and was washed with 500 ml of tetralin and 2 L of a mixed solvent having a ratio by molecular weight of 1:1 of 1,4-dioxane:methanol. The residual solid was dried at 70°C under reduced pressure of 1 mmHg to yield 72 g of polymer-supported phosphazenium chloride. A portion of the solid was subjected to ³¹P-NMR measurement, using tetrakis(dimethylamino)phosphonium tetrafluoroborate as an internal standard. From this, a peak corresponding to 1 atom of phosphorus at -35.4 ppm, a peak corresponding to 4 atoms of phosphorus at 5.8 ppm were observed, and the concentration of phosphazenium cations as measured by ³¹P-NMR in the solid was 0.427 mmol/g.

### (Example 3)

Synthesis of polymer-supported phosphazenium hydroxide

Into a 1-L glass flask equipped with a stirrer and a cooler, which was kept under a nitrogen atmosphere, 49 g of polymer-supported phosphazenium chloride (21 mmol in terms of phosphazenium cations) obtained in Example 2 and 400 ml of methanol were introduced and stirred at room temperature for 1 hour. Then, a solution obtained by dissolving 9.7 g of sodium methoxide in 100 ml of methanol was added, and was heated under reflux for 8 hours and then cooled to room temperature. The obtained suspension was filtered, washed with water, treated by contact with 880 g of a 4% aqueous sodium hydroxide solution and further washed with water. The residual solid was dried under heating at 70°C under reduced pressure of 1 mmHg to yield 49 g of polymer-supported phosphazenium hydroxide. The concentration of phosphazenium cations as measured by ³¹P-NMR in the solid was 0.431 mmol/g. In addition, chlorine atoms were not observed by elemental analysis, and the anion became hydroxide quantitatively.

### (Example 4)

Synthesis of polymer-supported phosphazenium iodide

8 g of polymer-supported phosphazenium hydroxide (3.4 mmol in terms of phosphazenium cations) obtained in Example 3 was packed in a column. The column treated by contact with 210 g of a 4% aqueous sodium chloride solution, and further washed with water. Then, the column treated by contact with 61 g of a 4% aqueous sodium iodide solution, and again washed with water. The obtained solid after treatment was dried under heating at 70°C under reduced pressure of 1 mmHg to give polymer-supported phosphazenium iodide. The concentration of phosphazenium cations as measured by ³¹P-NMR in the solid was 0.352 mmol/g. In addition, the concentration of iodide atoms as measured by analysis of the element in the solid was 0.358 mmol/g.

### (Example 5)

Synthesis of phosphazenium iodide having hydroxyl group

Into a 300-ml glass flask equipped with a stirrer which was kept under a nitrogen atmosphere, 4.3 g (16 mmol) of t-butyldimethylsilyl(4-chloromethylbenzyl)ether and 79 g of a tetralin solution of PZNB (13 mmol in terms of PZNB) obtained in Example 1 were introduced and the mixture was stirred overnight at room temperature. After the reaction, tetralin was distilled off under reduced pressure, and 100 ml of hexane was added with stirring. The hexane was removed by decantation. Such washing with hexane was performed total of five times, and the resulting mixture was dried under heating at 70°C under reduced pressure of 1 mmHg. Next, while ice-cooling the flask, a solution (1.0 M, 14 mmol) of tetrabutyl ammonium fluoride in tetrahydrofuran (hereinafter referred to THF) was added and the mixture was stirred at 40°C for 3 hours, and then 14 ml (14 mmol) of a 1 N aqueous hydrochloric acid solution was added, and further stirred continuously. Then, THF and water were distilled off under reduced pressure. To the residue, 250 ml of methylene chloride was added and formed a solution, and using a separatory funnel the solution was washed with water. The methylene chloride layer was condensed to yield a 10.8 g of viscous liquid. Next, to the obtained viscous liquid, a 70% aqueous ethylamine solution was added until it dissolved. The obtained solution was put into 300-ml glass flask equipped with a stirrer. 4.6 g of sodium iodide in a 70% ethylamine solution and 80 ml of water were added thereto with stirring, and the mixture was allowed to react for 5 days. The precipitated crystals were filtered, washed with water and dried under heating at 70°C under reduced pressure of 1 mmHg to yield 7.0 g of phosphazenium iodide having hydroxyl group, as white crystals. A portion of the solution was added to benzene-d6 and hexamethylphosphorictriamide was used as an internal standard in performing measurement of ³¹P-NMR. From this, a quintuplet corresponding to 1 atom of phosphorus at -33.2 ppm, a doublet corresponding to 3 atoms of phosphorus at 7.45 ppm, a doublet corresponding to 1 atom of phosphorus at 8.68 ppm were observed, and the purity was 96.5%. Further, 846 of a parent peak corresponding to phosphazenium cations were observed by FD-MS analysis.

### (Example 6)

Synthesis of phosphazenium iodide having polypropylene oxide as side chain

Into a 70-ml autoclave which was kept under a nitrogen atmosphere, 5.1 g (5.2 mmol) of phosphazenium iodide obtained in Example 5, 0.01 g (0.26 mmol) of potassium hydride and 30 ml of THF were introduced and the mixture was heated to 80°C with stirring for 3 hours, and then cooled to room temperature. Next, 3.0 g (52 mmol) of propylene oxide was added and heated to 80°C with stirring for 20 hours. After the reaction, the reaction solution was cooled to room temperature, and 0.3 ml (0.3 mmol) of a 1 N aqueous hydrochloric acid solution was added. The reaction solution after washing with water was dried under heating at 70°C under reduced pressure of 1 mmHg to yield an 8.0 g of viscous liquid. A portion of the solution was added to dimethylsulfoxide-d6 (hereinafter referred to DMSO-d6) and hexamethylphosphorictriamide was used as an internal standard in performing measurement of ³¹P-NMR. From this, a quintuplet corresponding to 1 atom of phosphorus at -33.1 ppm, a doublet corresponding to 3 atoms of phosphorus at 7.56 ppm, a doublet corresponding to 1 atom of phosphorus at 8.79 ppm were observed, and the purity was 100.6%. Further, the number average molecular weight (Mn) of 1412 and the molecular weight distribution (Mw/Mn) of 1.02 peak was observed by FD-MS analysis. Therefore, it was found that the phosphazenium iodide having decameric propylene oxide was introduced as a side chain by adding livingly.

### (Examples 7 to 11)

Synthesis of phosphazenium iodide having polyalkylene oxide as side chain

Synthesis was conducted in the same manner as in Example 6, except that the amount and the kinds of polyalkylene oxide was changed, whereby a variety of polyalkylene oxide was introduced as a side chain thus to synthesize phosphazenium iodide. The results are shown in Table 1.

**Table 1**

| | Type of Alkylene Oxide | Content Molar Ratio of Alkylene Oxide/Phosphazenium iodide | Number Average Molecular Weight (Mn) by FD-MS Analysis | Molecular weight Distribution (Mw/Mn) by FD-MS Analysis | Average Addition Number of Alkylene Oxide Calculated from Mn (proportional to Phosphazenium Iodide) |
|---|---|---|---|---|---|
| Ex. 7 | Propylene Oxide | 20.0 | 1893 | 1.01 | 18.0 |
| Ex. 8 | Ethylene Oxide | 7.3 | 1087 | 1.01 | 5.5 |
| Ex. 9 | ↑ | 12.6 | 1179 | 1.01 | 7.6 |
| Ex. 10 | ↑ | 19.5 | 1534 | 1.01 | 15.6 |
| Ex. 11 | ↑ | 31.1 | 2051 | 1.01 | 27.4 |

### (Example 12)

Synthesis of polymer-supported phosphazenium hydroxide

Into a 50-ml glass flask which was kept under a nitrogen atmosphere, 0.2 g (5.2 mmol) of potassium hydride and 9 ml of N,N-dimethylformamide (hereinafter referred to DMF), further 7.3 g of a DMF solution of phosphazenium iodide (5.2 mmol) obtained in Example 6 were introduced, and the mixture was stirred at room temperature for 3 hours. Into another 100-ml glass flask equipped with a stirrer, which was kept under a nitrogen atmosphere, 5.0 g of chloromethylated polystyrene-based resins (5.2 mmol in terms of chlorine atoms) (manufactured by Argonaut Technologies, Inc., ArgoPore-C1, 1.05 mmol-C1/g) and 50 ml of DMF were introduced and the mixture was stirred at room temperature for 1 hour. Then, the entire amount of a DMF solution of the previously prepared potassium salt of phosphazenium iodide was added and further stirred continuously for 20 hours. After completion of the reaction, the filtration was performed. The obtained resins as a residual solid were Soxhlet-washed with 1,4-dioxane as a solvent, and dried under heating at 70°C under reduced pressure of 1 mmHg. The resins after drying and 35 ml of methanol was put into a 100-ml glass flask equipped with a stirrer and a cooler, which was kept under a nitrogen atmosphere, and the mixture was stirred at room temperature for 1 hour, whereto a methanol solution (20 ml) of 2.5 g of sodium methoxide was added and heated under reflux for 8 hours, and then cooled to room temperature. The obtained suspension was filtered, washed with water, treated by contact with 34 g of a 4% aqueous sodium hydroxide solution and further washed with water. Then, the residual solid was dried at 70°C under reduced pressure of 1 mmHg to yield 5.3 g of polymer-supported phosphazenium hydroxide. A portion of the solid was subjected to ³¹P-NMR measurement, using tetrakis(dimethylamino)phosphonium tetrafluoroborate as an internal standard. From this, a peak corresponding to 1 atom of phosphorus at -35.7 ppm, a peak corresponding to 4 atoms of phosphorus at 5.7 ppm were observed, and the concentration of phosphazenium cations as measured by ³¹P-NMR in the solid was 0.122 mmol/g.

### (Example 13 to 17)

Synthesis of polymer-supported phosphazenium hydroxide

The reaction was conducted in the same manner as in Example 12, except that phosphazenium iodide obtained in Examples 7 to 11 was used instead of phosphazenium iodide obtained in Example 6 used in Example 12, therefore a variety of polymer-supported phosphazenium hydroxide was synthesized. The results are shown in Table 2.

**Table 2**

| | Used Phosphazenium Iodide | Value of ³¹P-NMR Shift (ppm, (Number of Phosphorus)) | Concentration of phosphazenium cations (mmol/g) |
|---|---|---|---|
| Ex. 13 | Ex. 7 | -35.6 (1), 5.5 (4) | 0.089 |
| Ex. 14 | Ex. 8 | -35.5 (1), 5.9 (4) | 0.202 |
| Ex. 15 | Ex. 9 | -35.4 (1), 6.0 (4) | 0.196 |
| Ex. 16 | Ex. 10 | -35.2 (1), 5.8 (4) | 0.229 |
| Ex. 17 | Ex. 11 | -35.0 (1), 5.8 (4) | 0.168 |

### (Example 18)

Synthesis of bis (dimethylamino){[tris({[tris(dimethylamino)phosphoranylid ene]amino})phosphoranylidene]amino}phosphinoxide (hereinafter, abbreviate as PZND)

Using the method as disclosed in JP-A No. 11-240893, 7607 g of tetrakis[tris(dimethylamino)phosphoranylideneamino]phosphoni um hydroxide in an aqueous solution was obtained. The aqueous solution was distilled off under reduced pressure of 50 to 100 mmHg at 60°C to yield 180 g of tetrakis [tris (dimethylamino)phosphoranylideneamino]phosphoni um hydroxide as a solid. The solid was transferred to a 5-L glass flask and heated at 130°C for 5 days having nitrogen flow through nitrogen injecting tube in a speed of 10 ml/min. After cooling to about room temperature, 3 L of hexane was added and the mixture was stirred for 30 minutes with a stirrer. After stirring, the content was left at rest to precipitate the insolubles. The insolubles were separated by decantation to give a transparent and colorless hexane solution. n-hexane within the solution was distilled off under normal pressure. At a point of time when about 2.8 L of n-hexane was collected, the distillation was stopped. n-hexane was further removed at reduced pressure of 1 to 20 mmHg to yield 110 g of a white solid. To a portion of the solid, DMSO-d6 was added and hexamethylphosphorictriamide was used as an internal standard in performing measurement of ³¹P-NMR. From this, a quintuplet corresponding to 1 atom of phosphorus at -25.46 ppm, a doublet corresponding to 1 atom of phosphorus at 7.08 ppm, a doublet corresponding to 3 atoms of phosphorus at 8.64 ppm were observed, and the purity was 97.5%. Further, 711 parent peak corresponding to PZND was observed by FD-MS analysis.

### (Example 19)

Synthesis of 1,1,1-tris{[tris(dimethylamino)phosphoranylidene]amino}-3,3-bis(dimethylamino)-3-chloro-3λ⁵-diphosphaze-1-nium chloride (hereinafter, abbreviated as PZND-Cl)

In a 500-ml glass flask equipped with a stirrer, which was kept under a nitrogen atmosphere, 30 g (42 mmol) of PZND obtained in Example 18 was dissolved in 50 ml of THF. 7.3 g (43 mmol) of 2,2-dichloro-1,3-dimethylimidazolidine was added as a solid at room temperature and then refluxed for about 3 hours. After cooling to room temperature, THF was distilled off under reduced pressure, and then 50 ml of THF and 200 ml of diethyl ether were sequentially added. After refluxing for 30 minutes, the resulting mixture was thoroughly stirred and cooled to room temperature to precipitate a white solid. The solid was filtered under a nitrogen atmosphere and dried under reduced pressure of 1 mmHg to yield 26 g of a white solid. A portion of the solid was added to DMSO-d6 and hexamethylphosphoric triamide was used as an internal standard in performing ³¹P-NMR measurement. From this, octets corresponding to 1 atom of phosphorus at -29.81 ppm, a doublet corresponding to 1 atom of phosphorus at 6.22 ppm, and a doublet corresponding to 3 atoms of phosphorus at 12.04 ppm were observed, and the purity was 99.5%. Further, 730 of a parent peak corresponding to PZND-Cl were observed by FD-MS analysis.

### (Example 20)

Synthesis of a siloxy group-containing phosphazenium chloride

Into a 300-ml glass flask equipped with a stirrer, which was kept under a nitrogen atmosphere, 21 g (27 mmol) of PZND-Cl obtained in Example 19, 150 ml of o-dichlorobenzene, 9.1 g (52 mmol) of t-butyldimethylsilyl(2-aminoethyl) ether and 4.7 g (27 mmol) of tris(dimethylamino)phospholane were introduced, and the mixture was allowed to react at 120°C for 24 hours and then cooled to room temperature. The reaction mixture was washed with water, the o-dichlorobenzene layer was distilled off under reduced pressure and then washed with 200 ml of diethyl ether. The washed solid was dried under normal pressure to yield 82 g of a white solid. A portion of the solid was added to THF-d8 and phosphoric acid tri-n-butyl ester was used as an internal standard in performing ³¹P-NMR measurement. From this, octets corresponding to 1 atom of phosphorus at -27.52 ppm, a doublet corresponding to 1 atom of phosphorus at 9.77 ppm, and a doublet corresponding to 3 atoms of phosphorus at 10.45 ppm were observed.

### (Example 21)

Synthesis of a hydroxyl group-containing phosphazenium iodide

Into a 500-ml glass flask equipped with a stirrer, which was kept under a nitrogen atmosphere, 200 ml of THF, 10.9 g (455 mmol) of sodium hydride, and 67 g (470 mmol) of methyl iodide were introduced, and the mixture was stirred at room temperature for 2 hours. Thereafter, 41 g of a THF solution of phosphazenium chloride (45 mmol) obtained in Example 20 was added, and the mixture was further stirred at room temperature for 16 hours. The suspansion after the reaction was filtered and washed with THF, and THF was distilled off from the filtrate under reduced pressure. The obtained solid was dissolved again in 300 ml of methylene chloride and the insolubles were filtered and methylene chloride was distilled off from the filtrate under reduced pressure to yield 41 g of a white solid. Into a 500-ml glass flask equipped with a stirrer, which was kept under a nitrogen atmosphere, the above white solid and 200 ml of THF were introduced, and the mixture was ice-cooled with stirring. To this, 41 ml of a THF solution of tetrabutylammonium fluoride (1.0 M, 41 mmol) was added, and the mixture was stirred at room temperature for 30 minutes. To the reaction solution, 300 ml of water and 300 ml of methylene chloride were added for liquid-separation, and the solvent was distilled off from an organic solvent layer under reduced pressure to give a solid, which was recrystallized from a 70% aqueous ethyl amine solution, thus to yield a 29 g of white solid. A portion of the solid was added to DMSO-d6 and hexamethyl phosphoric triamide was used as an internal standard in performing ³¹P-NMR measurement. From this, a quintuplet corresponding to 1 atom of phosphorus at -33.34 ppm, a doublet corresponding to 3 atoms of phosphorus at 7.60 ppm, and a doublet corresponding to 1 atom of phosphorus at 7.79 ppm were observed, and the purity was 100%.

### (Example 22)

Synthesis of polymer-supported phosphazenium hydroxide

Into a 100-ml glass flask which was kept under a nitrogen atmosphere, 0.7 g (29 mmol) of sodium hydride and 50 ml of DMF were introduced, a DMF solution of 25.2 g of phosphazenium iodide (28 mmol) obtained in Example 21 was further added thereto, and the mixture was stirred at room temperature for 3 hours. Into another 500-ml glass flask equipped with a stirrer, which was kept under a nitrogen atmosphere, 26.6 g of a chloromethylated polystyrene-based resin (28 mmol in terms of chlorine atoms) (manufactured by Argonaut Technologies, Inc., ArgoPore Cl, 1.05 mmol-Cl/g), and 300 ml of DMF were introduced, and the mixture was stirred at room temperature for 2 hours. Then, the entire amount of a DMF solution of the previously prepared sodium salt of phosphazenium iodide was added thereto, and the mixture was further stirred for 20 hours. After completion of the reaction, the resulting mixture was filtered and the resin obtained as a residual solid was washed five times with 50 ml of methanol and dried under heating at 70°C under reduced pressure of 1 mmHg. Into a 500-ml glass flask equipped with a stirrer and a cooler, which was kept under a nitrogen atmosphere, the dried resin and 200 ml of methanol were introduced, and the mixture was stirred at room temperature for 1 hour. To this, a solution (100 ml) of 7.9 g of sodium methoxide in methanol was added, and the mixture was heated under reflux for 8 hours and cooled to room temperature. The obtained suspension was filtered and washed with water, treated by contact with 527 g of a 4% aqueous sodium hydroxide solution and further washed with water. Thus, the residual solid was dried at 70°C under reduced pressure of 1 mmHg to yield 35 g of polymer-supported phosphazenium hydroxide. A portion of the solid was subjected to ³¹P-NMR measurement, using tetrakis(dimethylamino)phosphonium tetrafluoroborate as an internal standard. From this, a peak corresponding to 1 atom of phosphorus at -35.5 ppm, and a peak corresponding to 4 moles of phosphorus at 5.9 ppm were observed, and the concentration of phosphazenium cations as measured by ³¹P-NMR in the solid was 0.371 mmol/g.

### (Example 23)

Synthesis of polymer-supported phosphazenium chloride

17.4 g of a polymer-supported phosphazenium hydroxide (6.6 mmol in terms of phosphazenium cations) obtained in Example 22- was packed in a column and was treated by contact with 398 g of a 4% aqueous sodium chloride solution and further washed with water. Then, the solid after treatment was dried at 70°C under reduced pressure of 1 mmHg to give a polymer-supported phosphazenium chloride. The concentration of phosphazenium cations as measured by ³¹P-NMR in the solid was 0.368 mmol/g.

### (Example 24)

Synthesis of a siloxy group-containing phosphazenium chloride

The reaction was conducted in the same manner as in Example 20, except that diethylene glycol (t-butyldimethylsilyl)(2-aminoethyl) ether was used instead of t-butyldimethylsilyl(2-aminoethyl) ether used in Example 20. 958 of a parent peak corresponding to a siloxy group-containing phosphazenium chloride were observed by FD-MS analysis.

### (Example 25)

Synthesis of a hydroxyl group-containing phosphazenium hexafluorophosphate

The reaction was conducted in the same manner as in Example 21, except that phosphazenium chloride obtained in Example 24 was used instead of phosphazenium chloride used in Example 21, to give a white solid. Into a 50-ml glass flask, 3.0 g of the above solid, 20 ml of a 70% ethyl amine solution, and 0.5 g of sodium hexafluorophosphate were introduced, and the mixture was stirred for a while. The resulting mixture suspension was filtered and the filtrate allowed to stand for recrystallization to yield 1.3 g of white solid crystals. A portion of the solid was added to DMSO-d6 and hexamethylphosphoric triamide was used as an internal standard in performing ³¹P-NMR measurement. From this, a quintuplet corresponding to 1 atom of phosphorus at -33.31 ppm, a doublet corresponding to 3 atoms of phosphorus at 7.58 ppm, a doublet corresponding to 1 atom of phosphorus at 7.72 ppm and a heptet corresponding to 1 atom of phosphorus at 57.0 ppm were observed, and the purity was 91.4%. Further, 858 of a parent peak corresponding to a phosphazenium cations portion was observed by FD-MS analysis.

### (Example 26)

Synthesis of polymer-supported phosphazenium hexafluorophosphate

Into a 50-ml glass flask which was kept under a nitrogen atmosphere, 0.07 g (1.7 mmol) of potassium hydride and 10 ml of DMF were introduced, 1.3 g (1.3 mmol) of phosphazenium hexafluorophosphate obtained in Example 25 was further added thereto, and the mixture was stirred at room temperature for 3 hours. Into another 100-ml glass flask equipped with a stirrer, which was kept under a nitrogen atmosphere, 1.1 g of a chloromethylated polystyrene-based resin (1.3 mmol in terms of chlorine atoms) (manufactured by Argonaut Technologies, Inc., ArgoPore Cl, 1.20 mmol-Cl/g) and 15 ml of DMF were introduced, and the mixture was stirred at room temperature for 1 hour. Then, the entire amount of a DMF solution of the previously prepared potassium salt of phosphazenium hexafluorophosphate was added thereto, and the mixture was further stirred for 24 hours. After completion of the reaction, the resulting mixture was filtered and the resin obtained as a residual solid was Soxhlet-washed with 1,4-dioxane as a solvent, and then dried under heating at 70°C under reduced pressure of 1 mmHg to yield 1.1 g of polymer-supported phosphazenium hexafluorophosphate. A portion of the solid was subjected to ³¹P-NMR measurement, using tetrakis(dimethylamino)phosphonium tetrafluoroborate as an internal standard. From this, a peak corresponding to 1 atom of phosphorus at -35.7 ppm, and a peak corresponding to 4 moles of phosphorus at 5.9 ppm were observed, and the concentration of phosphazenium cations as measured by ³¹P-NMR in the solid was 0.266 mmol/g.

### (Example 27)

Synthesis of polymer-supported phosphazenium hydroxide

Into a 50-ml glass flask equipped with a stirrer and a cooler, which was kept under a nitrogen atmosphere, the entire amount of the polymer-supported phosphazenium hexafluorophosphate obtained in Example 26 and 10 ml of methanol were introduced, and the mixture was stirred at room temperature for 1 hour. To this, 10 ml of a methanol solution of 1.0 g sodium methoxide was added, and the mixture was heated under reflux for 8 hours and then cooled to room temperature. The obtained suspension was filtered and washed with water, treated by contact with 34 g of a 4% aqueous sodium hydroxide solution and washed with water. Then, the residual solid was dried at 70°C under reduced pressure of 1 mmHg to yield a 1.1 g of polymer-supported phosphazenium hydroxide. A portion of the solid was subjected to ³¹P-NMR measurement, using tetrakis(dimethylamino)phosphonium tetrafluoroborate as an internal standard. From this, a peak corresponding to 1 atom of phosphorus at -35.7 ppm, and a peak corresponding to 4 moles of phosphorus at 5.9 ppm were observed, and the concentration of phosphazenium cations as measured by ³¹P-NMR in the solid was 0.297 mmol/g.

### (Example 28)

Synthesis of polymer-supported phosphazenium hydroxide

Into a 100-ml glass flask equipped with a stirrer, which was kept under a nitrogen atmosphere, 4.7 g of a chloromethylated polystyrene-based resin (2.0 mmol in terms of chlorine atoms) (manufactured by Argonaut Technologies, Inc., Argo-Gel-Wang Cl, 0.43 mmol-Cl/g), and 20 g of tetralin were introduced, and the mixture was stirred at room temperature for 1 hour. Thereafter, 17.8 g of a tetralin solution of PZNB (2.7 mmol in terms of PZNB) obtained in Example 1 in was added thereto, and the mixture was further stirred continuously for 4 days. Thus obtained suspension was filtered under a nitrogen atmosphere, and washed with 50 ml of tetralin and 200 ml of a mixed solvent having a ratio by weight of 1:1 of 1,4-dioxane:methanol. The obtained residual solid was dried at 70°C under reduced pressure of 1 mmHg to yield 5.0 g of polymer-supported phosphazenium chloride. A portion of the solid was subjected to ³¹P-NMR measurement, using tetrakis(dimethylamino)phosphonium tetrafluoroborate as an internal standard. From this, a peak corresponding to 1 atom of phosphorus at -35.4 ppm, and a peak corresponding to 4 moles of phosphorus at 5.8 ppm were observed, and the concentration of phosphazenium cations as measured by ³¹P-NMR in the solid was 0.316 mmol/g. Then, into a 50-ml glass flask equipped with a stirrer and a cooler, which was kept under a nitrogen atmosphere, 2.3 g of the previously obtained polymer-supported phosphazenium chloride (6.1 mmol in terms of phosphazenium cations) and 10 ml of methanol were introduced, and the mixture was stirred at room temperature for 1 hour. Thereafter, 0.37 g of sodium methoxide was dissolved in 10 ml of methanol, and the solution was added, heated under reflux for 8 hours and then cooled to room temperature. The obtained suspension was filtered and washed with water, treated by contact with 80 g of a 4% aqueous sodium hydroxide solution and washed with water. Then, the residual solid was dried at 70°C under reduced pressure of 1 mmHg to yield a 2.3 g of polymer-supported phosphazenium hydroxide. The concentration of phosphazenium cations by ³¹P-NMR measurement in the solid was 0.312 mmol/g. In addition, chlorine atoms were not observed by elemental analysis, and the anions became hydroxide quantitatively.

### (Examples 29 to 30)

Synthesis of polymer-supported phosphazenium hydroxide

The reaction was conducted in the same manner as in Example 28, except that the kinds of the chloromethylated polystyrene-based resin used in Example 28 were changed, thus to synthesize various polymer-supported phosphazenium hydroxide. The results are shown in Table 3.

**Table 3**

| | Name of chloromethylated polystyrene-based resin | Content of chlorine resin (mmol/g) | ³¹P-NMR Shift value (ppm, phosphorous expressed in parenthesis) | Concentration of phosphazenium cations (mmol/g) |
|---|---|---|---|---|
| Ex. 29 | 2-pyridine-co-Merrifield resin manufactured by Advanced ChemTech | 1.0 | -34.8 (1), 6.2 (4) | 0.463 |
| Ex. 30 | JandaJels Cl manufactured by Aldrich | 0.70 | -35.5 (1), 5.8 (4) | 0.165 |

### (Example 31)

Synthesis of polymer-supported phosphazenium hydroxide

Into a 50-ml glass flask which was kept under a nitrogen atmosphere, 0.18 g (4.6 mmol) of potassium hydride and 20 ml of DMF were introduced, of a DMF solution of 5.0 g phosphazenium iodide (3.7 mmol) obtained in Example 9 was added thereto, and the mixture was stirred at room temperature for 5 hours. Into another 200-ml glass flask equipped with a stirrer, which was kept under a nitrogen atmosphere, 3.6 g of a chloromethylated polystyrene-based resin (3.6 mmol in terms of chlorine atoms) (manufactured by Advanced ChemTech, 2-pyridine-co-Merrifield resin, 1.0 mmol-Cl/g) and 50 ml of DMF were introduced, and the mixture was stirred at room temperature for 1 hour. Then, the entire amount of a DMF solution of the previously prepared potassium salt of phosphazenium iodide was added thereto, and the mixture was further stirred for 62 hours. After completion of the reaction, the resulting mixture was filtered and the resin obtained as a residual solid was Soxhlet-washed with 1,4-dioxane as a solvent, and then dried under heating at 70°C under reduced pressure of 1 mmHg. Into a 200-ml glass flask equipped with a stirrer and a cooler, which was kept under a nitrogen atmosphere, the dried resin and 50 ml of methanol were introduced, and the mixture was stirred at room temperature for 1 hour. To this, a methanol solution (10 ml) of 2.6 g of sodium methoxide was added, and the mixture was heated under reflux for 8 hours and then cooled to room temperature. The obtained suspension was filtered and washed with water, treated by contact with 161 g of a 4% aqueous sodium hydroxide solution and washed with water. Thus, the residual solid was dried at 70°C at under reduced pressure of 1 mmHg to yield a 3.6 g of polymer-supported phosphazenium hydroxide. A portion of the solid was subjected to ³¹P-NMR measurement, using tetrakis(dimethylamino)phosphonium tetrafluoroborate as an internal standard. From this, a peak corresponding to 1 atom of phosphorus at -34.7 ppm, and a peak corresponding to 4 moles of phosphorus at 6.0 ppm were observed, and the concentration of phosphazenium cations as measured by ³¹P-NMR in the solid was 0.138 mmol/g.

### (Example 32)

Synthesis of polymer-supported phosphazenium hydroxide

Into a 50-ml glass flask which was kept under a nitrogen atmosphere, 0.1 g (2.4 mmol) of potassium hydride and 10 ml of DMF were introduced, a DMF solution of 3.3 g of phosphazenium iodide (2.6 mmol) obtained in Example 9 was added thereto, and the mixture was stirred at room temperature for 5 hours. Into another 100-ml glass flask equipped with a stirrer, which was kept under a nitrogen atmosphere, 3.1 g of a chloromethylated polystyrene-based resin (2.2 mmol in terms of chlorine atoms) (manufactured by Aldrich, JandaJels Cl, 0.70 mmol-Cl/g) and 30 ml of DMF were introduced and the mixture was stirred at room temperature for 1 hour. Then, the entire amount of a DMF solution of the previously prepared potassium salt of phosphazenium iodide was added thereto, and the mixture was further stirred for 45 hours. After completion of the reaction, the resulting mixture was filtered and the resin obtained as a residual solid was Soxhlet-washed with 1,4-dioxane as a solvent, and then dried under heating at 70°C under reduced pressure of 1 mmHg. Into a 100-ml glass flask equipped with a stirrer and a cooler, which was kept under a nitrogen atmosphere, the dried resin and 40 ml of methanol were introduced, and the mixture was stirred at room temperature for 1 hour. To this, a solution (10 ml) of 2.4 g of sodium methoxide in methanol was added, and the mixture was heated under reflux for 8 hours and then cooled to room temperature. The obtained suspension was filtered and washed with water, treated by contact with 89 g of a 4% aqueous sodium hydroxide solution and washed with water. Thus, the residual solid was dried at 70°C at under reduced pressure of 1 mmHg to yield a 2.2 g of polymer-supported phosphazenium hydroxide. A portion of the solid was subjected to ³¹P-NMR measurement, using tetrakis(dimethylamino)phosphonium tetrafluoroborate as an internal standard. From this, a peak corresponding to 1 atom of phosphorus at -34.8 ppm, and a peak corresponding to 4 moles of phosphorus at 6.2 ppm were observed, and the concentration as measured by ³¹P-NMR in the solid was 0.078 mmol/g.

### (Example 33)

Synthesis of styryl group-containing phosphazenium iodide

Into a 300-ml glass flask equipped with a stirrer, which was kept under a nitrogen atmosphere, 96 g of a tetralin solution of PZNB (15 mmol in terms of PZNB) and 73 ml of o-dichlorobenzene were introduced, and the mixture was ice-cooled with stirring. 2.7 g (18 mmol) of 4-vinylbenzylchloride was added dropwise thereto, and the resulting mixture was stirred at room temperature overnight. After the reaction, tetralin and o-dichlorobenzene were distilled off under reduced pressure to give an orange colored viscous liquid. To this, 60 ml of hexane was added, and after stirring the hexane was removed by decantation. Washing with hexane was performed 3 times, and the precipitated solid was dissolved by adding 230 ml of a 70% aqueous ethylamine solution. 2.4 g (16 mmol) of sodium iodide and 15 ml of water were added thereto, the mixture was stirred at room temperature for 1 hour, and then the resulting mixture was allowed to stand for 4 days. Precipitated crystals was filtered, and then washed with water and hexane to yield light yellow crystals. Thus obtained crystals were recrystallized using a mixed solvent of ethyl acetate and hexane, and the precipitated crystals were filtered, washed with hexane and then dried under heating at 70°C under reduced pressure of 1 mmHg to yield 8.7 g of styryl group-containing phosphazenium iodide as white crystals. A portion of the solid was added to benzene-d6 and hexamethylphosphoric triamide was used as an internal standard in performing ³¹P-NMR measurement. From this, a quintuplet corresponding to 1 atom of phosphorus at -33.7 ppm, a doublet corresponding to 3 atoms of phosphorus at 7.50 ppm, and a doublet corresponding to 1 atom of phosphorus at 8.77 ppm were observed, and the purity was 96.1%. Further, 841 of a parent peak corresponding to the phosphazenium cation were observed by FD-MS analysis.

### (Example 34)

Synthesis of allyl group-containing phosphazenium iodide

The reaction was conducted in the same manner as in Example 33, except that an equimolar amount of allyl chloride was used instead of 4-vinylbenzylchloride used in Example 33. A portion of the obtained compound was added to benzene-d6 and hexamethylphosphoric triamide was used as an internal standard in performing ³¹P-NMR measurement. From this, a quintuplet corresponding to 1 atom of phosphorus at -33.6 ppm, a doublet corresponding to 3 atoms of phosphorus at 7.58 ppm, and a doublet corresponding to 1 atom of phosphorus at 8.83 ppm were observed, and the purity was 97.1%.

### (Example 35)

Synthesis of polymer-supported phosphazenium iodide and hydroxide

Into a 50-ml glass flask equipped with a stirrer, which was kept under a nitrogen atmosphere, 0.082 g (0.50 mmol) of 2,2'-azobisisobutyronitrile, 0.97 g (0.96 mmol) of phosphazenium iodide obtained in Example 33 were introduced and 20 ml of toluene was added, and the mixture was stirred. 10.52 g (101.0 mmol) of styrene monomer was put thereto, and after stirring the resulting mixture at 100°C for 7 hours, the mixture was cooled to -77°C for quenching the reaction. The reaction mixture was poured into 1.5 L of methanol to give white precipitates. The precipitates were filtered and dried under heating at 70°C under reduced pressure of 1 mmHg to yield 4.4 g of polymer-supported phosphazenium iodide as a white solid.

The obtained 3.6 g of polymer-supported phosphazenium iodide was packed in a column, and treated by contact with a 4% aqueous sodium chloride/methanol solution, and further washed with methanol and water. The solid after treatment was dried under heating at 70°C under reduced pressure of 1 mmHg to yield polymer-supported phosphazenium hydroxide. A portion of the solid was subjected to ³¹P-NMR measurement, using tetrakis(dimethylamino)phosphonium tetrafluoroborate as an internal standard. From this, a peak corresponding to 1 atom of phosphorus at -35.1 ppm, a peak corresponding to 4 atoms of phosphorus at 5.6 ppm were observed, and the concentration of phosphazenium cations as measured by ³¹P-NMR in the solid was 0.1039 mmol/g. The solid was a copolymer which was copolymerized in a molar ratio of 1:84 of styryl group-containing phosphazenium salt:styrene monomer. Further, a polymer having the number average molecular weight (Mn) of 8536 and the molecular weight distribution (Mw/Mn) of 1.76 was observed by GPC analysis (in terms of standard polystyrene).

### (Example 36)

Synthesis of trimethoxysilyl group-containing phosphazenium chloride - 1

In a 100-ml glass flask which was kept under a nitrogen atmosphere, 3.0 ml (12.2 mmol) of 4-(chloromethyl)phenethyl trimethoxysilane was dissolved in 100 ml of dry hexane. To the solution, 50 g of a tetralin solution of PZNB (0.220 mmol/g to 11.0 mmol/g of PZNB) was added dropwise at room temperature. Simultaneously with adding dropwise, a light brown oily matter was separated. After completion of adding dropwise, the resulting mixture was further stirred for 30 minutes. The light brown oily matter was separated from a colorless supernatant liquid, and then 5 ml of dry methanol was added thereto. The mixture was washed with 15 ml of dry hexane for four times. The solvent was distilled off under reduced pressure to yield 10.5 g of an orange colored oily matter. From the results of ¹H, ¹³C and ³¹P NMR, the main component of the oily matter was formed to be the desired trimethoxysilyl group-containing phosphazenium chloride. The identification results of ¹H, ¹³C and ³¹P NMR are shown below.
¹H NMR (CDCl₃, 270 MHz): 7.15 (m,4H), 4.13 (d, 2H), 3.57 (s, 9H), 2.8-2.5 (m, 71H), 1.00 (m, 2H)
¹³C NMR (CDCl₃, 270 MHz): 143.2, 135.8, 127.9, 127.8, 53.2, 50.5, 37.4-36.8, 34.0, 28.3, 11.3
³¹P NMR (CDCl₃, 109.3 MHz) : 7.25 (d, 1P), 5.92 (d, 3P), -34.9 (q, 1P)

From the result of ³¹P NMR, the oily matter having the aforementioned trimethoxysilyl group-containing phosphazenium chloride as a main component, comprises a compound represented by general formula (5) as a by-product, wherein a=b=c=d=1, R=R¹ =Me, D'=H, n=1 and Z=Cl. Further, the purity of trimethoxysilyl group-containing phosphazenium chloride in the oily matter observed from the peak integral ratio for the NMe₂ group in ¹H NMR was about 80%.

### (Example 37)

Synthesis of trimethoxysilyl group-containing phosphazenium chloride-2

In a 100-ml glass flask which was kept under a nitrogen atmosphere, 0.87 ml (4.0 mmol) of 4-(chloromethyl)phenyl trimethoxysilane was dissolved in 30 ml of dry hexane. To the solution, 15 g of a tetralin solution of PZNB (0.220 mmol/g to 3.3 mmol/g of PZNB) was added dropwise at room temperature. Simultaneously with adding dropwise, a light brown oily matter was separated. After completion of adding dropwise, the resulting mixture was further stirred for 30 minutes. The light brown oily matter was separated from a colorless supernatant liquid, and then 2 ml of dry methanol was added thereto. The mixture was washed with 5 ml of dry hexane for four times. The solvent was distilled off under reduced pressure to yield 2.90 g of an orange colored oily matter. From the results of ¹H, ¹³C and ³¹P NMR, the main component of the oily matter was formed to be desired trimethoxysilyl group-containing phosphazenium chloride. The identification results of ¹H, ¹³C and ³¹P NMR are shown below.
¹H NMR (CDCl₃, 270 MHz): 7.61 (m, 2H), 7.26 (d, 2H), 4.21 (d, 2H), 3.64 (s, 9H), 2.8-2.5 (m, 69H)
¹³C NMR (CDCl₃, 270 MHz): 141.4, 134.9, 134.7, 127.3, 53.6, 50.1, 37.5-36.8, 34.3
³¹P NMR (CDCl₃, 109.3 MHz): 7.33 (d, 1P), 5.94 (d, 3P), -34.9 (q, 1P)

From the result of ³¹P NMR, the oily matter having the aforementioned trimethoxysilyl group-containing phosphazenium chloride as the main component, comprises a compound represented by general formula (5) as a by-product, wherein a=b=c=d=1, R=R¹ =Me, D'=H, n=1 and Z=Cl. Further, the purity of trimethoxysilyl group-containing phosphazenium chloride in the oily matter observed from the peak integral ratio for the NMe₂ group in ¹H NMR was about 50%.

### (Example 38)

Synthesis of trimethoxysilyl group-containing phosphazenium bromide

In a 100-ml glass flask which was kept under a nitrogen atmosphere, 0.75 ml (4.0 mmol) of 3-bromopropyl trimethoxysilane was dissolved in 30 ml of dry hexane. To the solution, 15 g a tetralin solution of PZNB (0.220 mmol/g to 3.3 mmol/g of PZNB) was added dropwise at room temperature. Simultaneously with adding dropwise, a light brown oily matter was separated. After completion of adding dropwise, the resulting mixture was further stirred for 30 minutes. The light brown oily matter was separated from a colorless supernatant liquid, and then 2 ml of dry methanol was added thereto. The mixture was washed with 5 ml of dry hexane for four times. The solvent was distilled off under reduced pressure to yield 3.10 g of an orange colored oily matter. From the results of ¹H, ¹³C and ³¹P NMR, the main component of the oily matter was formed to be desired trimethoxysilyl group-containing phosphazenium bromide. The identification results of ¹H, ¹³C and ³¹P NMR are shown below.
¹H NMR (CDCl₃ 270 MHz): 3.58 (s, 9H), 2.9-2.5 (m, 71H), 1.56 (m, 2H), 0.53 (m, 2H)
¹³C NMR (CDCl₃, 270 MHz): 52.2, 50.6, 37.3-36.9, 34.0, 21.5, 6.5
³¹P NMR (CDCl₃, 109.3 MHz): 6.20 (d, 1P), 6.00 (d, 3P), -35.1 (q, 1P)

From the result of ³¹P NMR, the oily matter having the trimethoxysilyl group-containing phosphazenium bromide as a main component, comprises a compound represented by general formula (5) as a by-product, wherein a=b=c=d=1, R=R¹ =Me, D'=H, n=1 and Z=Br. Further, the purity of trimethoxysilyl group-containing phosphazenium bromide in the oily matter observed from the peak integral ratio for the NMe₂ group in ¹H NMR was about 70%.

### (Example 39)

Preparation of phosphazenium chloride-supporting silica gel by hydrolysis-polycondensation method - 1

Into a 100-ml, two-necked round-bottomed glass flask equipped with a stirrer, a thermometer, a cooler and the like, 7.40 g (6.2 mmol) of crude trimethoxysilyl group-containing phosphazenium chloride obtained in Example 36, 50.0 g (0.24 mol) of tetraethoxysilane, 50 ml of ethanol and 0.80 ml (9.2 mmol) of 36% hydrochloric acid were introduced. 10.0 g of water was added dropwise thereto over 10 minutes, and then the mixture was stirred at 60°C for 3 hours. After allowing the resulting mixture to cool, 50.0 g of water was added and 2.0 ml of 28% ammonium water was added dropwise to rapidly solidify the reaction mixture. The resulting mixture was allowed to stand at room temperature for 3 days, and washed twice with 100 ml of ion-exchanged water. The obtained solid was dried at 100°C under reduced pressure of 1 mmHg for 4 hours to yield 20.9 g of phosphazenium chloride-supporting silica gel (amount of supported phosphazenium chloride: 0.30 mmol/g). The specific surface area measured by the nitrogen gas adsorption method was 432 m²/g, and the pore volume of the pores having diameter of 9 to 500 Å was 0.30 cm³/g. Peaks at 35.2 (1P) ppm, 13.4 - 5.8 (3P) ppm and -36.4 (1P) ppm were observed in solid ³¹P NMR.

### (Example 40)

Preparation of phosphazenium chloride-supporting silica gel by hydrolysis-polycondensation method - 2

Into a 100-ml two-necked round-bottomed glass flask equipped with a stirrer, a thermometer, a cooler and the like, 5.95 g (5.0 mmol) of crude trimethoxysilyl group-containing phosphazenium chloride obtained in Example 36, 20.8 g (0.10 mol) of tetraethoxysilane, 20 ml of ethanol and 0.60 ml (6.9 mmol) of 36% hydrochloric acid were introduced. 5.0 g of water was added dropwise thereto over 10 minutes, and then the mixture was stirred at 60°C for 3 hours. After allowing the resulting mixture to cool, 20.0 g of water was added and 1.0 ml of 28% ammonium water was added dropwise to rapidly solidify the reaction mixture. The resulting mixture was allowed to stand at room temperature for 3 days, and washed twice with 50 ml of ion-exchanged water. The obtained solid was dried at 80°C under reduced pressure of 1 mmHg for 4 hours to yield 11.1 g of phosphazenium chloride-supporting silica gel (amount of supported phosphazenium chloride: 0.45 mmol/g). The specific surface area measured by the nitrogen gas adsorption method was 277 m²/g, and the pore volume of the pores having diameter of 9 to 500 Å was 0.59 cm³/g.

### (Example 41)

Preparation of phosphazenium chloride-supporting silica gel by silylation method

Into a 50-ml two-necked round-bottomed glass flask equipped with a stirrer, a thermometer, a cooler and the like, 2.26 g (1.9 mmol) of crude trimethoxysilyl group-containing phosphazenium chloride obtained in Example 36, 5.00 g of silica gel (manufactured by Kanto Kagaku Chemical Co. Ltd., 60N) and 20 ml of dry toluene were introduced under a nitrogen atmosphere, and the mixture was heated and stirred under reflux for 12 hours. The resulting mixture was filtered, and after washing twice with 20 ml of methanol, the obtained solid was dried at 80°C under reduced pressure of 1 mmHg for 4 hours to yield 6.50 g of phosphazenium chloride-supporting silica gel (amount of supported phosphazenium chloride: 0.24 mmol/g). The specific surface area measured by the nitrogen gas adsorption method was 447 m²/g, and the pore volume of the pores having diameter of 9 to 500 Å was 0.47 cm³/g. Peaks were observed at 5.71 (4P) ppm and -36.1 (1P) ppm in solid ³¹P NMR.

### (Example 42)

Preparation of phosphazenium hydroxide-supporting silica gel - 2

11.1 g of phosphazenium chloride-supporting silica gel (3.33 mmol in terms of phosphazenium cations) obtained in Example 39 was packed in a column. After flowing 30.0 ml (30 mmol) of a 1 mol/L aqueous ammonia solution (SV = 3) through the column, it was washed with ion-exchanged water and methanol. The solid after the treatment was dried at 80°C under reduced pressure of 1 mmHg for 6 hours to yield 11.0 g of phosphazenium hydroxide-supporting silica gel (amount of supported phosphazenium hydroxide: 0.30 mmol/g). No chlorine atom was observed by elemental analysis. Further, the specific surface area measured by the nitrogen gas adsorption method was 454 m²/g, and the pore volume of the pores having diameter of 9 to 500 Å was 0.36 cm³/g. Peaks were observed at 5.75 (4P) ppm and -36.1 (1P) ppm in solid ³¹P NMR.

### (Example 43)

Preparation of phosphazenium hydroxide-supporting silica gel-3

3.24 g of phosphazenium chloride-supporting silica gel (1.46 mmol in terms of phosphazenium cations) obtained in Example 40 was packed in a column. After flowing 29.2 ml (29.2 mmol) of a 1 mol/L aqueous ammonia solution (SV = 4) through the column, it was washed with ion-exchanged water and methanol. The solid after the treatment was dried at 80°C under reduced pressure of 1 mmHg for 6 hours to yield 3.15 g of phosphazenium hydroxide-supporting silica gel (amount of supported phosphazenium hydroxide: 0.45 mmol/g).

### (Example 44)

Preparation of phosphazenium hydroxide-supporting silica gel - 1

2.72 g of phosphazenium chloride-supporting silica gel (0.65 mmol in terms of phosphazenium cations) obtained in Example 41 was packed in a column. After flowing 6.3 ml (6.3 mmol) of a 1 mol/L aqueous ammonia solution (SV = 4) through a column, it was washed with ion-exchanged water and methanol. The solid after the treatment was dried at 80°C under reduced pressure of 1 mmHg for 6 hours to yield 2.65 g of phosphazenium hydroxide-supporting silica gel (amount of supported phosphazenium hydroxide: 0.24 mmol/g). No chlorine atom was observed by elemental analysis. Further, the specific surface area measured by the nitrogen gas adsorption method was 428 m²/g, and the pore volume of the pores having diameter of 9 to 500 Å was 0.50 cm³/g. Peaks were observed at 5.95 (4P) ppm and -36.1 (1P) ppm in solid ³¹P NMR.

### (Example 45)

Alkylation of a phenolic hydroxyl group using polymer-supported phosphazenium iodide as catalyst

Into a 100-ml glass flask equipped with a stirrer and a cooler, which was kept under a nitrogen atmosphere, 2.7 g of polymer-supported phosphazenium iodide (1.0 mmol in terms of phosphazenium cations) obtained in Example 4, 0.49 g (5.2 mmol) of phenol and 30 ml of dimethyl carbonate were introduced, and the mixture was heated under reflux for 18 hours with stirring, and then cooled to room temperature. The supernatant liquid of suspension after the reaction was partly withdrawn and subjected to gas chromatography. Thus, it was found that the conversion of phenol was 99.4% and the yield of the objective anisole was 91.0%. In addition, the suspension after the reaction was filtered, Soxhlet-washed with dimethyl carbonate as a solvent and dried under heating at 70°C under reduced pressure of 1 mmHg to recover 2.7 g of polymer-supported phosphazenium iodide.

### (Comparative Example 1)

The reaction was conducted in the same manner as in Example 45, except that 2.7 g of polymer-supported phosphazenium iodide (1.0 mmol in terms of phosphazenium cations) used in Example 45 was not used. Gas chromatography was conducted, and thus it was found that phenol was not changed completely and the objective anisole could not be obtained completely.

### (Comparative Example 2)

The reaction was conducted in the same manner as in Example 45, except that 1.0 mmol of tetrakis[tris(dimethylamino)phosphoranylideneamino]phosphoni um iodide was used instead of 2.7 g of polymer-supported phosphazenium iodide (1.0 mmol in terms of phosphazenium cations) used in Example 45. Gas chromatography was conducted, and thus it was found that phenol was completely changed and the yield of the objective anisole was 93.4%.

It was found that polymer-supported phosphazenium iodide had the active catalyst equivalent to that of polymer-unsupported phosphazenium iodide.

### (Examples 46 to 54)

Recycling of recovered catalyst

The reaction was conducted in the same manner as in Example 45, except that the recovered polymer-supported phosphazenium iodide obtained in Example 45 was used instead of polymer-supported phosphazenium iodide used in Example 45, and after the reaction, polymer-supported phosphazenium iodide was recovered. Further, this recovered polymer-supported phosphazenium iodide was repeatedly used in the reaction. The results are shown in Table 4.

**Table 4**

| | Catalyst used | Conversion of phenol (%) | Yield of anisole (%) |
|---|---|---|---|
| Ex. 45 | Polymer-supported phosphazenium iodide obtained in Example 4 | 99.4 | 91.0 |
| Ex. 46 | Polymer-supported phosphazenium iodide recovered in Example 45 | 99.5 | 93.4 |
| Ex. 47 | Polymer-supported phosphazenium iodide recovered in Example 46 | 100 | 94.2 |
| Ex. 48 | Polymer-supported phosphazenium iodide recovered in Example 47 | 100 | 91.9 |
| Ex. 49 | Polymer-supported phosphazenium iodide recovered in Example 48 | 100 | 94.5 |
| Ex. 50 | Polymer-supported phosphazenium iodide recovered in Example 49 | 100 | 88.7 |
| Ex. 51 | Polymer-supported phosphazenium iodide recovered in Example 50 | 100 | 90.2 |
| Ex. 52 | Polymer-supported phosphazenium iodide recovered in Example 51 | 100 | 91.8 |
| Ex. 53 | Polymer-supported phosphazenium iodide recovered in Example 52 | 100 | 92.8 |
| Ex. 54 | Polymer-supported phosphazenium iodide recovered in Example 53 | 100 | 95.9 |

Further, the concentration of phosphazenium cations in polymer-supported phosphazenium iodide recovered in Example 54 as measured by ³¹P-NMR was 0.345 mmol/g, and there was no elimination of phosphazenium iodide by repeated use.

### (Example 55)

Polymerization of polyalkylene oxide using polymer-supported phosphazenium hydroxide as catalyst

Into a 70-ml autoclave equipped with a thermometer, a pressure gauge, a stirrer and an inlet tube for alkylene oxide, which was kept under a nitrogen atmosphere, 1.0 g (11 mmol) of glycerin, 0.3 g of polymer-supported phosphazenium hydroxide (0.13 mmol in terms of phosphazenium cations) obtained in Example 3 and 34 g of propylene oxide were introduced, the autoclave was sealed, and the mixture was heated to 80°C with stirring. At this time, the pressure in the autoclave was elevated to 0.3 MPa (gauge pressure). Thereafter, the pressure was lowered by consumption of propylene oxide, but the reaction continued until there was no more pressure reduction. After completion of the reaction, the resulting mixture was cooled to room temperature and the residual propylene oxide was distilled off under reduced pressure. The suspension was withdrawn from the autoclave, diluted with THF and then filtered. Further, the residual solid was sufficiently washed with THF and THF was distilled off from the filtrate to yield 32 g of colorless and odorless polypropylene oxide. Polymerization activity (the amount of the produced polypropylene oxide per mole of the catalyst and a unit time) was 10.9 g/mmol.h.

### (Comparative example 3)

The reaction was conducted in the same manner as in Example 55, except that 0.06 g (1.6 mmol) of potassium hydroxide was used instead of polymer-supported phosphazenium hydroxide used in Example 55. 30 g of polypropylene oxide could be obtained, but polymerization activity was only 0.29 g/mmol·h.

### (Examples 56 to 58)

The reaction was conducted in the same manner as in Example 55, except that a 300-ml autoclave was used, and the kinds and the amount of alcohol and the amount of propylene oxide as shown in Table 5 were employed instead of glycerin used in Example 55. The results are shown in Table 5.

**Table 5**

| | Kind of alcohols | Amount of alcohol used (g) | Amount of propylene oxide used (g) | Amount of polypropylene oxide obtained (g) | Catalytic activity (g/mmol·h) |
|---|---|---|---|---|---|
| Ex. 56 | 1-phenyl-2-propanol | 17.7 | 83 | 101 | 9.6 |
| Ex. 57 | 1-phenoxyethanol | 16.8 | 105 | 120 | 10.2 |
| 58 | Ex. 3-phenyl-1-propanol | 16.2 | 109 | 123 | 8.9 |

### (Examples 59 to 69)

The reaction was conducted in the same manner as in Example 55, except that a 70-ml or 300-ml autoclave was used, and the amount of glycerin and the amount of propylene oxide as shown in Table 6 were employed instead of polymer-supported phosphazenium hydroxide used in Example 55. The results are shown in Table 6.

**Table 6**

| | Kind of catalyst | Amount of glycerin used (g) | Molar ratio of glycerin/catalyst | Amount of propylene oxide used (g) | Amount of polypropylene oxide obtained (g) | Catalytic activity (g/mmol .h) |
|---|---|---|---|---|---|---|
| Ex. 55 | Polymer-supported phosphazenium hydroxide obtained in Example 3 | 1.0 | 85 | 34 | 32 | 10.9 |
| Ex. 59 | Polymer-supported phosphazenium hydroxide obtained in Example 3 | 1.5 | 82 | 110 | 108 | 24.3 |
| Ex. 60 | Polymer-supported phosphazenium hydroxide obtained in Example 12 | 2.6 | 93 | 84 | 80 | 7.1 |
| Ex. 61 | Polymer-supported phosphazenium hydroxide obtained in Example 14 | 2.9 | 83 | 95 | 98 | 5.4 |
| Ex. 62 | Polymer-supported phosphazenium hydroxide obtained in Example 22 | 2.9 | 83 | 102 | 104 | 13.2 |
| Ex. 63 | Polymer-supported phosphazenium hydroxide obtained in Example 27 | 3.1 | 86 | 103 | 101 | 2.8 |
| Ex. 64 | Polymer-supported phosphazenium hydroxide obtained in Example 28 | 1.0 | 83 | 32 | 32 | 11.6 |
| Ex. 65 | Polymer-supported phosphazenium hydroxide obtained in Example 29 | 1.2 | 79 | 43 | 44 | 12.2 |
| Ex. 66 | Polymer-supported phosphazenium hydroxide obtained in Example 30 | 1.2 | 82 | 38 | 39 | 16.0 |
| Ex. 67 | Polymer-supported phosphazenium hydroxide obtained in Example 31 | 1.5 | 83 | 51 | 49 | 9.9 |
| Ex. 68 | Polymer-supported phosphazenium hydroxide obtained in Example 32 | 1.1 | 86 | 36 | 36 | 14.4 |
| Ex. 69 | Polymer-supported phosphazenium hydroxide obtained in Example 32 | 0.6 | 88 | 34 | 34 | 19.1 |
| Comp. Ex. 3 | Potassium hydroxide | 1.0 | 7 | 34 | 30 | 0.3 |

### (Examples 70 to 72)

Recovery and recycling of polymer-supported phosphazenium hydroxide

Into a 300-ml autoclave equipped with a thermometer, a pressure gauge, a stirrer and an inlet tube for alkylene oxide, which was kept under a nitrogen atmosphere, 3.2 g of glycerin, 2.5 g of polymer-supported phosphazenium hydroxide obtained in Example 17 and 104 g of propylene oxide were introduced, the autoclave was sealed, and the mixture was heated to 80°C with stirring. At this time, the pressure in the autoclave was elevated to 0.32 MPa (gauge pressure). Thereafter, the pressure was lowered by consumption of propylene oxide, but the reaction continued until there was no more pressure reduction. After completion of the reaction, the resulting mixture was cooled to room temperature and the residual propylene oxide was distilled off under reduced pressure. The suspension was withdrawn from the autoclave, diluted with THF and then filtered. Further, the residual solid was sufficiently washed with THF, and THF was distilled off from the filtrate under reduced pressure to yield 103 g of colorless and odorless polypropylene oxide. Polymerization activity (the amount of the produced polypropylene oxide per mole of the catalyst and a unit time) was 2.0 g/mmol·h. Further, the residual solid after filtration was dried under heating at 70°C under reduced pressure of 1 mmHg to recover a catalyst. Then, the entire amount of the recovered catalyst, 2.7 g of glycerin and 85 g of propylene oxide were introduced into a 300-ml autoclave and the mixture was subjected to polymerization at 80°C and worked-up after the reaction to yield 87 g of polypropylene oxide and a recovered catalyst. Further, the recovered catalyst was provided for polymerization with 2.7 g of glycerin and 86 g of propylene oxide to yield 85 g of polypropylene oxide. It was found that the second and the third catalytic activity were 1.9 g/mmol.h and 2.0 g/mmol.h, respectively, and polymer-supported phosphazenium hydroxide in the invention had no reduction in the activities even after being recovered and recycled as catalyst.

### (Example 73 to 81)

Recovery and recycling of polymer-supported phosphazenium hydroxide

The reaction was conducted in the same manner as in Example 69, except that the entire amount of the supported catalyst used in the polymerization of Example 69 was used after recovery. Further, the catalyst after polymerization was recovered, and was repeatedly used in the following reactions in the same manner. The results are shown in Table 7.

**Table 7**

| | Catalyst used | catalytic activity (g/mmol·h) |
|---|---|---|
| Ex. 69 | Polymer-supported phosphazenium hydroxide obtained in Example 32 | 19.1 |
| Ex. 73 | Polymer-supported phosphazenium hydroxide recovered in Example 69 | 18.9 |
| Ex. 74 | Polymer-supported phosphazenium hydroxide recovered in Example 73 | 16.9 |
| Ex. 75 | Polymer-supported phosphazenium hydroxide recovered in Example 74 | 17.3 |
| Ex. 76 | Polymer-supported phosphazenium hydroxide recovered in Example 75 | 16.4 |
| Ex. 77 | Polymer-supported phosphazenium hydroxide recovered in Example 76 | 19.2 |
| Ex. 78 | Polymer-supported phosphazenium hydroxide recovered in Example 77 | 14.4 |
| Ex. 79 | Polymer-supported phosphazenium hydroxide recovered in Example 78 | 16.4 |
| Ex. 80 | Polymer-supported phosphazenium hydroxide recovered in Example 79 | 12.1 |
| Ex. 81 | Polymer-supported phosphazenium hydroxide recovered in Example 80 | 14.0 |

Even after ten cycles of repeated polymerization processes, the catalyst was found to have sufficient catalytic activity.

### (Example 82)

Polymerization of polyalkylene oxide using polymer-supported phosphazenium hydroxide as catalyst

Into a 70-ml autoclave equipped with a thermometer, a pressure gauge, a stirrer and an inlet tube for alkylene oxide, which was kept under a nitrogen atmosphere, 0.6 g (7.0 mmol) of glycerin, 0.9 g of polymer-supported phosphazenium hydroxide (0.09 mmol in terms of phosphazenium cations) obtained in Example 35, and 33 g of propylene oxide were introduced, the autoclave was sealed, and the mixture was heated to 80°C with stirring. At this time, the pressure in the autoclave was elevated to 0.3 MPa (gauge pressure). Thereafter, the pressure was lowered by consumption of propylene oxide, but the reaction was continued until there was no more pressure reduction. After completion of the reaction, the resulting mixture was cooled to room temperature and the residual propylene oxide was distilled off under reduced pressure. The suspension was withdrawn from the autoclave, diluted with normal hexane and then filtered. Further, the filtrate was sufficiently washed with normal hexane, and normal hexane was distilled off under reduced pressure from the filtrate to yield 33 g of colorless and odorless polypropylene oxide. The polymerization activity (the amount of the produced polypropylene oxide per mole of the catalyst and a unit time) was 12.4 g/mmol.h.

### (Example 83 to 84)

Recovery and recycling of polymer-supported phosphazenium hydroxide

The residual solid obtained in Example 82 after filtration was dried under heating at 70°C under reduced pressure of 1 mmHg to recover a catalyst. Then, the entire amount of the recovered catalyst, 0.6 g of glycerin and 30 g of propylene oxide were introduced into a 70-ml autoclave and in the same manner as in Example 82, the mixture was subjected to polymerization at 80°C and worked-up after the reaction to yield 30 g of polypropylene oxide and a recovered catalyst. Further, the recovered catalyst was provided for polymerization with 0.5 g of glycerin and 29 g of propylene oxide to yield 29 g of polypropylene oxide. It was found that the second and the third catalytic activity were 10.6 g/mmol-h and 14.7 g/mmol·h, respectively, and polymer-supported phosphazenium hydroxide in the invention had no reduction in the activity even after being recovered and recycled as catalyst.

### (Example 85)

Aldol condensation of acetone using phosphazenium hydroxide-supporting silica gel as catalyst

Into a 50-ml round-bottomed glass flask, 1.0 g of phosphazenium hydroxide-supporting silica gel (0.45 mmol in terms of phosphazenium cations) obtained in Example 43 and 26.5 g (0.45 mol) of acetone were introduced, and the mixture was stirred at room temperature under a nitrogen atmosphere. After 8 hours, a portion of the supernatant liquid of the suspension was withdrawn and subjected to gas chromatography. Thus, it was found that the conversion of acetone was 3.5%, and the selectivities of diacetone alcohol and methyl oxide were 97.2% and 2.8%, respectively.

### (Example 86)

Aldol condensation of acetone using phosphazenium hydroxide-supporting silica gel as catalyst

Into a 50-ml round-bottomed glass flask, 1.0 g of phosphazenium hydroxide-supporting silica gel (0.24 mmol in terms of phosphazenium cations) obtained in Example 44 and 14.0 g (0.24 mol) of acetone were introduced, and the mixture was stirred at room temperature under a nitrogen atmosphere. After 8 hours, a portion of the supernatant liquid of the suspension was withdrawn and subjected to gas chromatography. Thus, it was found that the conversion of acetone was 1.3%, and the selectivity of diacetone alcohol was 100%.

### (Comparative Example 4)

The reaction was conducted in the same manner as in Example 85, except that 0.34 g (0.45 mmol) of tetrakis[tris(dimethylamino)phosphoranylideneamino]phosphoni um hydroxide was used instead of phosphazenium hydroxide-supporting silica gel used in Example 85. After 8 hours, the supernatant liquid of suspension was partly withdrawn and subjected to gas chromatography. Thus, it was found that the conversion of acetone was 8.0% and the selectivities of diacetone alcohol and methyl oxide were 78.2% and 21.3%, respectively.

### (Chemical scheme of each Example)

### Example 1 PZNB

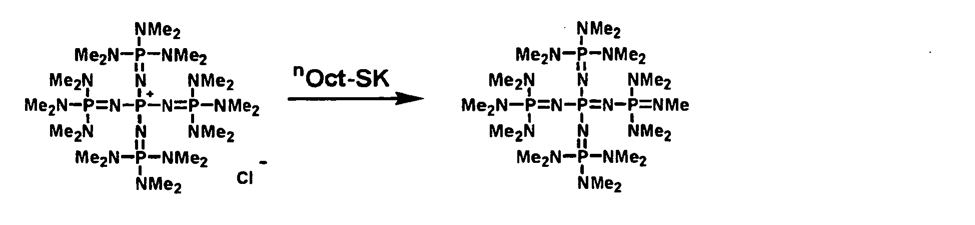

### Example 2 Polymer-supported phosphazenium chloride

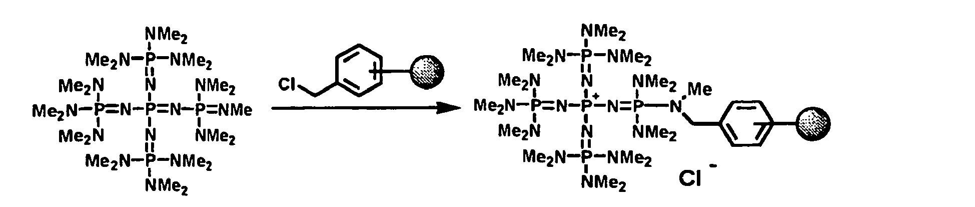

### Example 3 Polymer-supported phosphazenium hydroxide

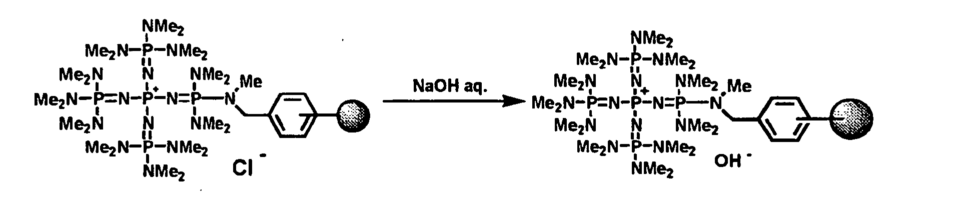

### Example 4 Polymer-supported phosphazenium iodide

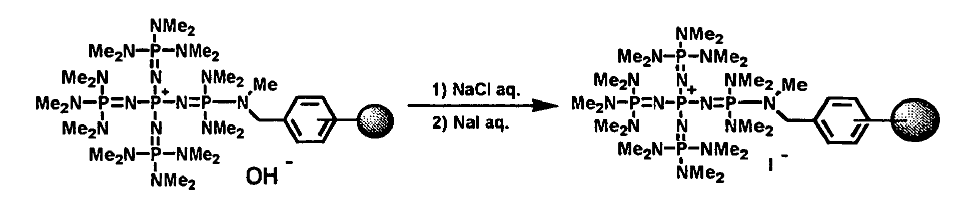

### Example 5 Hydroxyl group-containing phosphazenium iodide

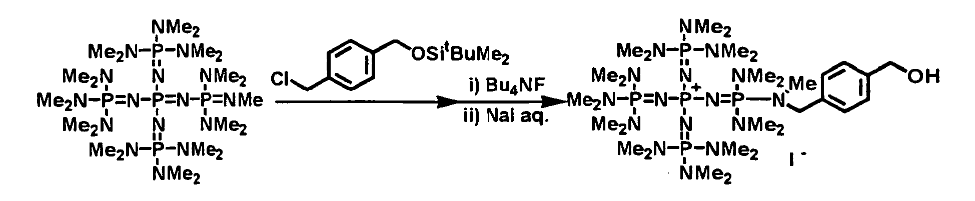

### Examples 6 to 11 Phosphazenium iodide having polyalkylene oxide on its side-chain

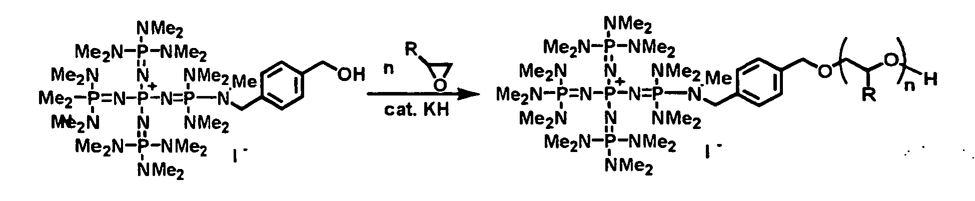

### Examples 12 to 17 Polymer-supported phosphazenium hydroxide

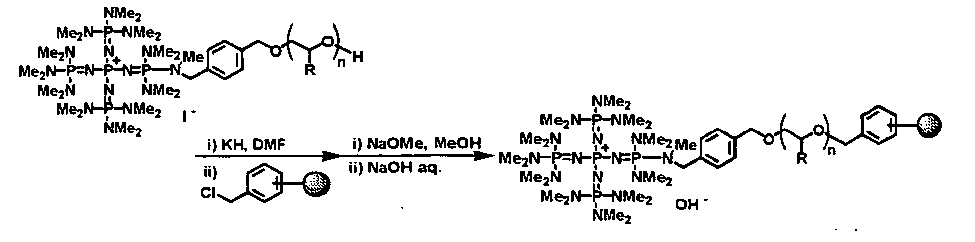

### Example 18 PZND

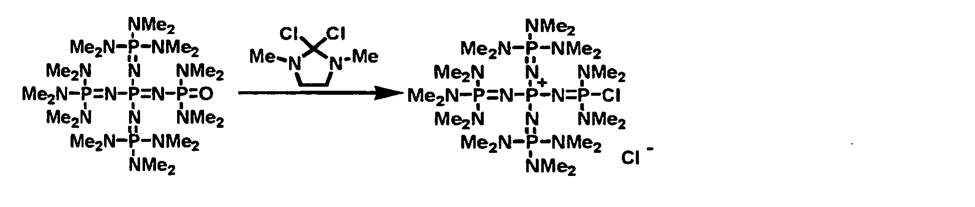

### Example 19 PZND-C1

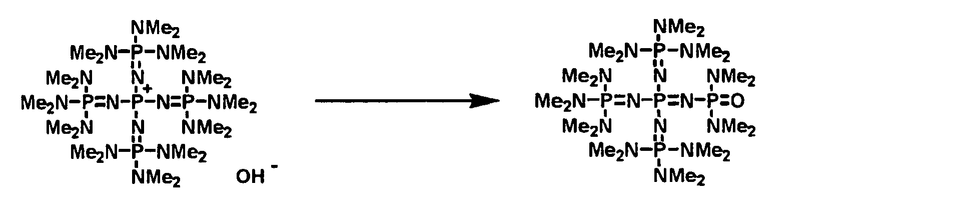

### Example 20 Siloxy group-containing phosphazenium chloride

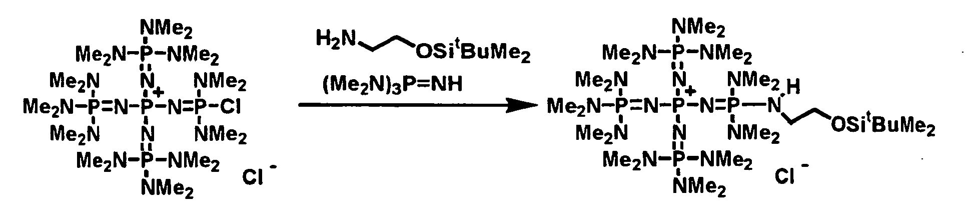

### Example 21 Hydroxyl group-containing phosphazenium iodide

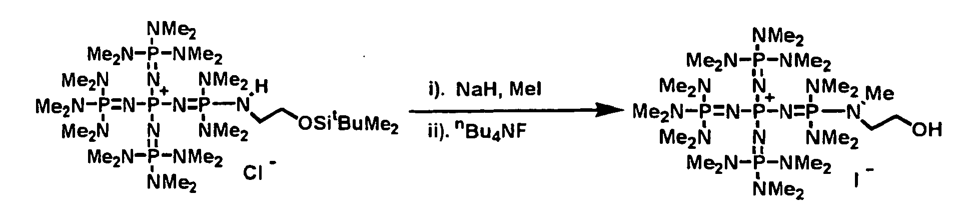

### Example 22 Polymer-supported phosphazenium hydroxide

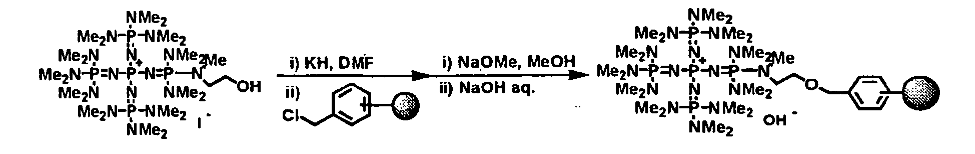

### Example 23 Polymer-supported phosphazenium chloride

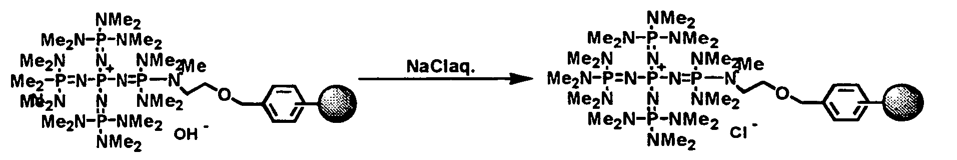

### Example 24 Siloxy group-containing phosphazenium chloride

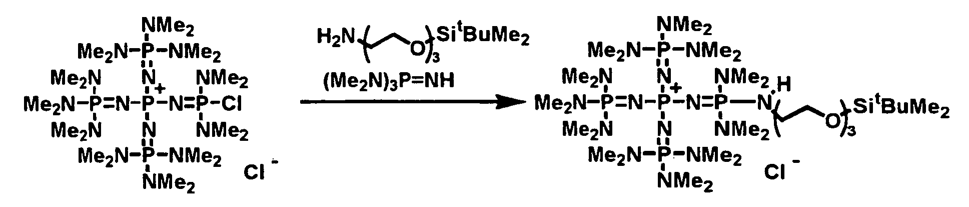

### Example 25 Hydroxyl group-containing phosphazenium hexafluorophosphate

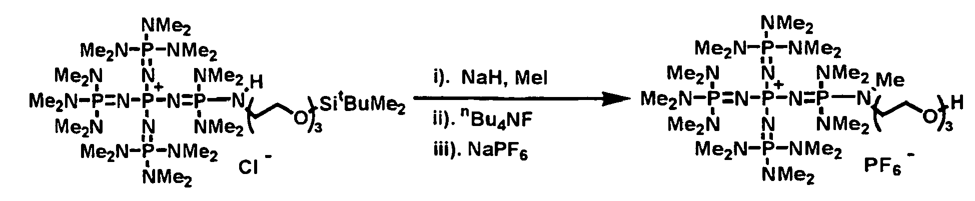

### Example 26 polymer-supported phosphazenium hexafluorophosphate

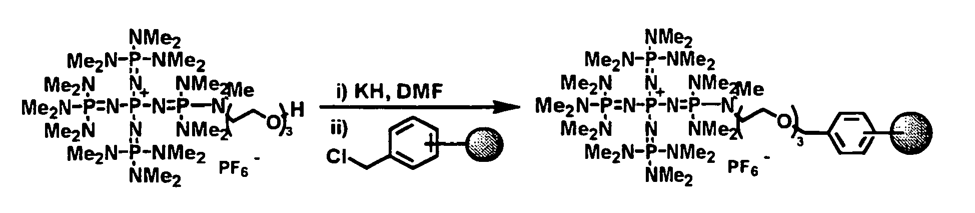

### Example 27 Polymer-supported phosphazenium hydroxide

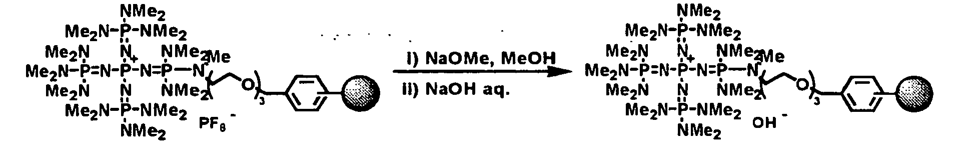

### Examples 28 to 30 Polymer-supported phosphazenium hydroxide

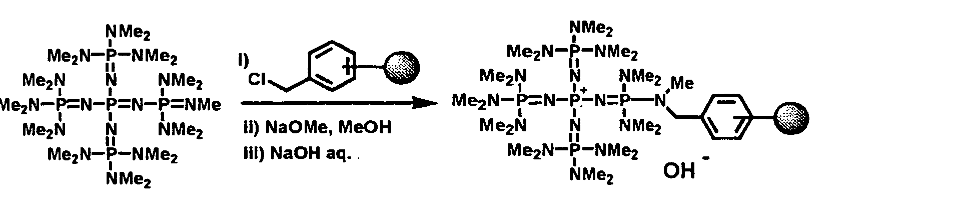

### Examples 31 and 32 Polymer-supported phosphazenium hydroxide

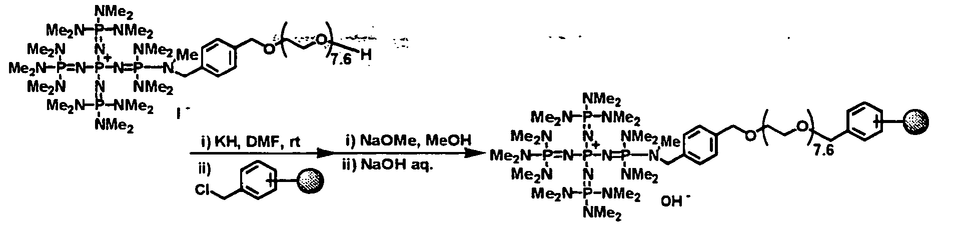

### Example 33 Styryl group-containing phosphazenium iodide

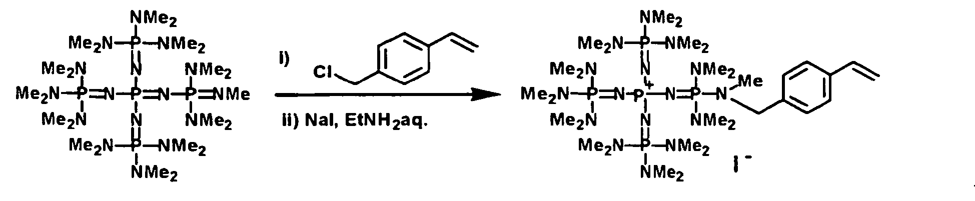

### Example 34 Allyl group-containing phosphazenium iodide

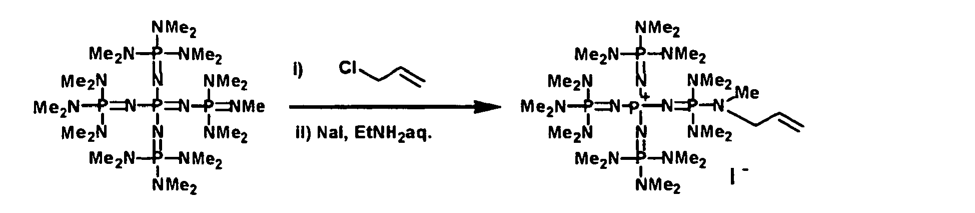

### Example 35 Polymer-supported phosphazenium iodide and hydroxide

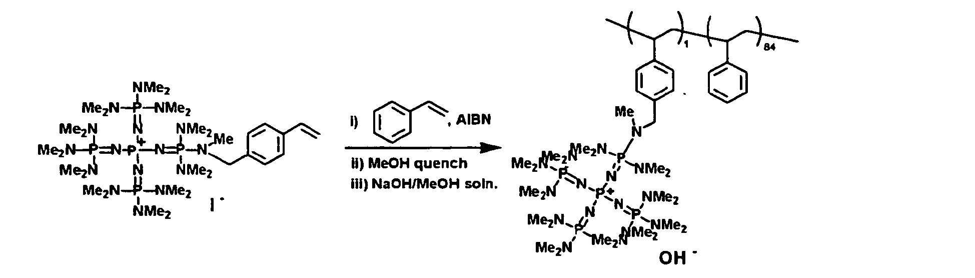

### Example 36 Trimethoxysilyl group-containing phosphazenium chloride-1

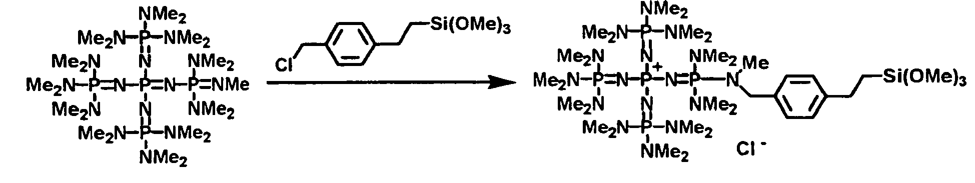

### Example 37 Trimethoxysilyl group-containing phosphazenium chloride-2

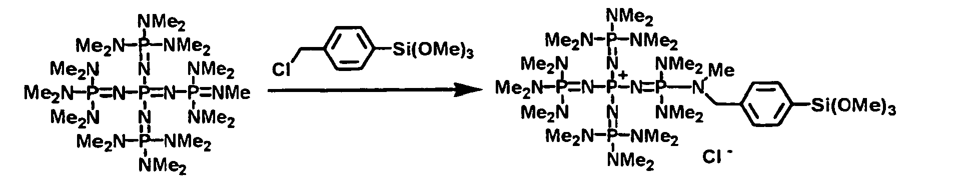

### Example 38 Trimethoxysilyl group-containing phosphazenium bromide

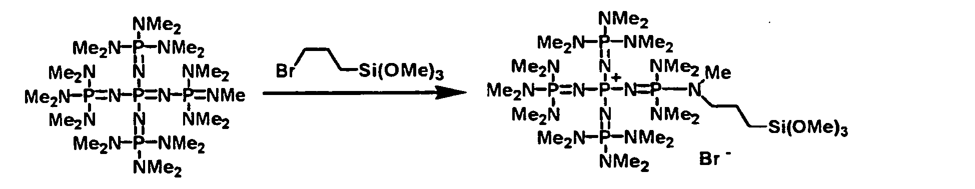

### Examples 39 to 40 Phosphazenium chloride-supporting silica gel (hydrolysis-polycondensation method)

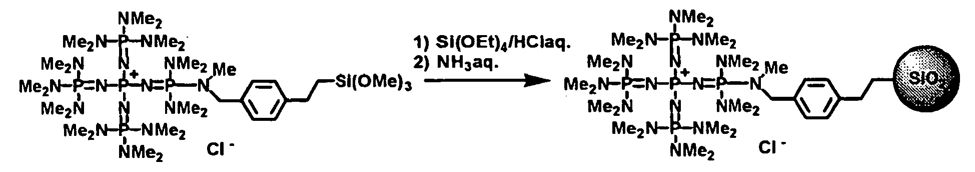

### Example 41 Phosphazenium chloride-supporting silica gel (silylation method)

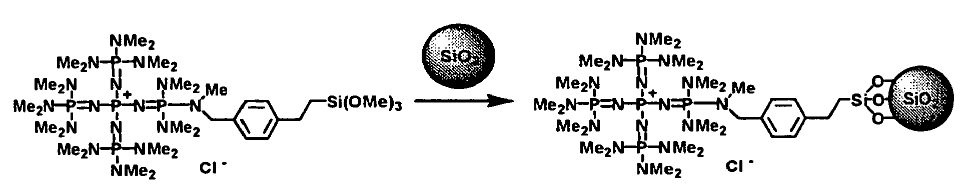

### Examples 42 to 44 Phosphazenium hydroxide-supporting silica gel

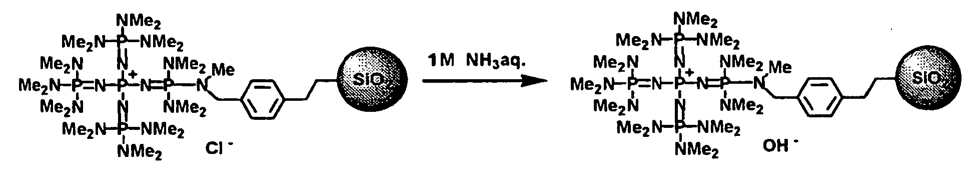

The phosphazene-supported catalyst of the invention is useful as a catalyst for various organic reactions, and in particular a catalyst for polymerizing the cyclic monomers and substituting the substituents. Further, the phosphazene compound and the phosphazenium salt of the invention are each an intermediate which is useful for preparing the phosphazene-supported catalyst of the invention, as well as a catalyst which is useful itself for proceeding various organic reactions.

## Claims

1. A phosphazene-supported catalyst in which a support is bonded to a group represented by the general formula (1): 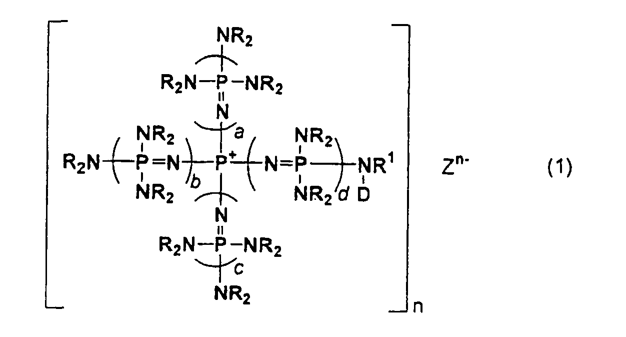 (wherein n is an integer of 1 to 8 and represents the number of phosphazenium cations, and Zⁿ⁻ is an anion of an active hydrogen compound in a form derived by releasing n protons from an active hydrogen compound having a maximum of 8 active hydrogen atoms, wherein the active hydrogen compound giving Zⁿ⁻ is selected from the group of compounds having an active hydrogen atom on an oxygen atom, a nitrogen atom, a sulfur atom and inorganic acids. a, b, c and d are each a positive integer of 3 or less. R's represent the same or different hydrocarbon groups having 1 to 10 carbon atoms and two R's located on each common nitrogen atom optionally bind to each other to form a ring structure. R¹ is a hydrogen atom or a hydrocarbon group having 1 to 10 carbon atoms. D is a direct bond or a divalent group and binds the catalyst to a support, the divalent group being a hydrocarbon group which optionally has a heteroatom selected from the group consisting of an oxygen atom, a sulfur atom, a nitrogen atom, and a silicon atom.)

2. A novel phosphazene compound represented by the general formula (2): 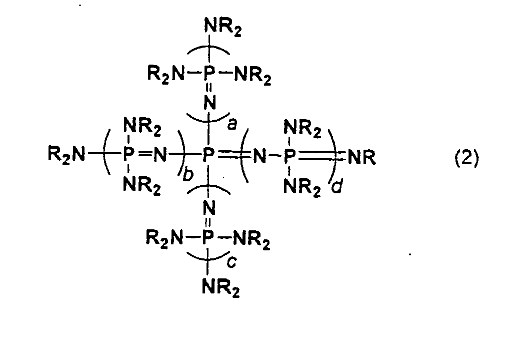 (wherein a, b, c and d represent a positive integer of 3 or less, respectively. R's represent the same or different hydrocarbon groups having 1 to 10 carbon atoms and two R's located on each common nitrogen atom optionally bind to each other to form a ring structure.)

3. A novel phosphazene compound represented by the general formula (3): 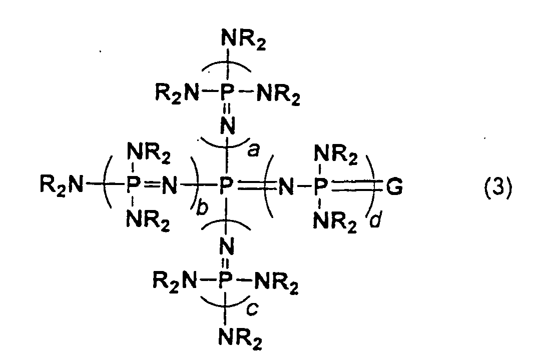 (wherein a, b, c and d are each a positive integer of 3 or less. G is an oxygen atom or a sulfur atom. R's are the same or different hydrocarbon groups having 1 to 10 carbon atoms and two R's located on each common nitrogen atom optionally

4. A novel phosphazenium salt represented by the general formula (4): 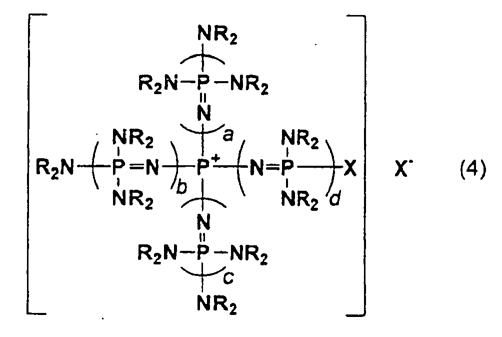 (wherein a, b, c and d are each a positive integer of 3 or less. R's represent the same or different hydrocarbon groups having 1 to 10 carbon atoms and two R's located on each common nitrogen atom optionally bind to each other to form a ring structure. X is a halogen atom, and X⁻ is an anion of a halogen atom which is the same or different from X.)

5. A novel phosphazenium salt represented by the general formula (5): 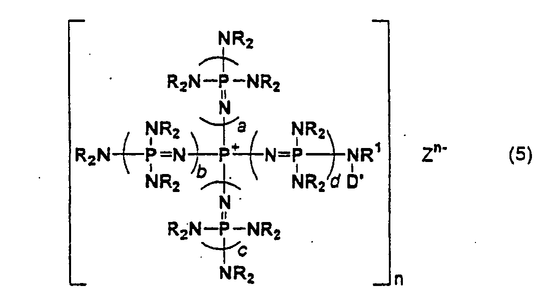 (wherein n is an integer of 1 to 8 and represents the number of phosphazenium cations, and Zⁿ⁻ is an anion of an active hydrogen compound in a form derived by releasing n protons from an active hydrogen compound having a maximum of 8 active hydrogen atoms, wherein the active hydrogen compound giving Zⁿ⁻ is selected from the group of compounds having an active hydrogen atom on an oxygen atom, a nitrogen atom, a sulfur atom and inorganic acids. a, b, c and d are each a positive integer of 3 or less. R's represent the same or different hydrocarbon groups having 1 to 10 carbon atoms and two R's located on each common nitrogen atom optionally bind to each other to form a ring structure. R¹ is a hydrogen atom or a hydrocarbon group having 1 to 10 carbon atoms. D' is a monovalent hydrocarbon group having a heteroatom which is bonded to N with the proviso that it is other than a hydrogen atom and a saturated hydrocarbon group.)

6. A novel phosphazenium salt represented by the general formula (6): 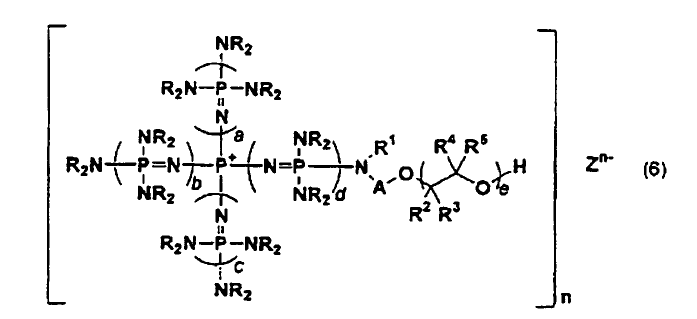 (wherein n is an integer of 1 to 8 and represents the number of phosphazenium cations, and Zⁿ⁻ is an anion of an active hydrogen compound in a form derived by releasing n protons from an active hydrogen compound having a maximum of 8 active hydrogen atoms, wherein the active hydrogen compound giving Zⁿ⁻ is selected from the group of compounds having an active hydrogen atom on an oxygen atom, a nitrogen atom, a sulfur atom and inorganic acids a, b, c and d are each a positive integer of 3 or less. R's represent the same or different hydrocarbon groups having 1 to 10 carbon atoms and two R's located on each common nitrogen atom optinally bind to each other to form a ring structure. A is a hydrocarbon group having 1 to 20 carbon atoms. Further, R¹ is a hydrogen atom or a hydrocarbon group having 1 to 10 carbon atoms. R², R³, R⁴ and R⁵ are each a hydrogen atom or a hydrocarbon group having 1 to 8 carbon atoms. e is 0 to 200.)

7. A novel phosphazenium salt represented by the general formula (7): 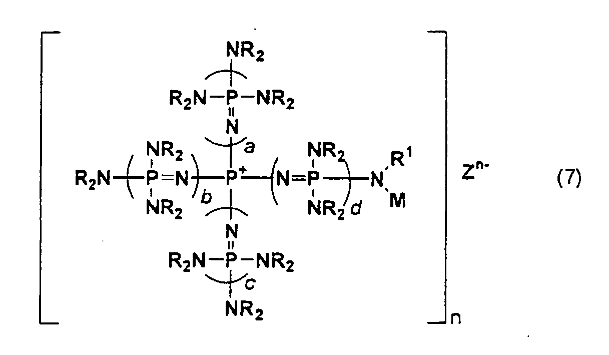 (wherein n is an integer of 1 to 8 and represents the number of phosphazenium cations, and Zⁿ⁻ is an anion of an active hydrogen compound in a form derived by releasing n protons from an active hydrogen compound having a maximum of 8 active hydrogen atoms, wherein the active hydrogen compound giving Zⁿ⁻ is selected from the group of compounds having an active hydrogen atom on an oxygen atom, a nitrogen atom, a sulfur atom and inorganic acids. a, b, c and d are each a positive integer of 3 or less. R's represent the same or different hydrocarbon groups having 1 to 10 carbon atoms and two R's located on each common nitrogen atom optionally bind to each other to form a ring structure. R¹ is a hydrogen atom or a hydrocarbon group having 1 to 10 carbon atoms. M is a group having a carbon-carbon unsaturated bond.)

8. A novel phosphazenium salt represented by the general formula (8): 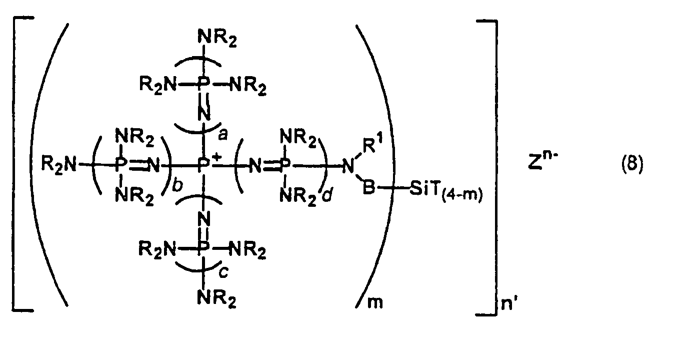 (wherein m is an integer of 1 to 3 and represents the number of phosphazenium cations bonded to a silicon atom, n' is an integer of 1 to 8 and represents the number of silicon compounds to which phosphazenium cations are bonded, n is a multiplier of m and n', and Zn- is an anion of an active hydrogen compound in a form derived by releasing n protons from an active hydrogen compound having a maximum of 24 active hydrogen atoms, wherein the active hydrogen compound giving Zⁿ⁻ is selected from the group of compounds having an active hydrogen atom on an oxygen atom, a nitrogen atom, a sulfur atom and inorganic acids. a, b, c and d are each a positive integer of 3 or less. R's represent the same or different hydrocarbon groups having 1 to 10 carbon atoms and two R's located on each common nitrogen atom optionally bind to each other to form a ring structure. B is a hydrocarbon group having 1 to 20 carbon atoms. Further, R¹ is a hydrogen atom or
a hydrocarbon group having 1 to 10 carbon atoms. T is a functional group in which a Si-T bond can be broken by hydrolysis, and is selected from the group consisting of a halogen atom and an alkoxy group.)

9. A method for producing a polyalkylene oxide, comprising polymerizing an alkylene oxide in the presence of the supported catalyst according to claim 1.

10. A method for producing an aromatic ether, comprising allowing an aromatic compound having at least one hydroxyl group bonded to its aromatic ring to react with a carbonic acid diester in the presence of the supported catalyst according to claim 1.

11. A method for producing a β-hydroxycarbonyl compound and/or an α,β-unsaturated carbonyl compound comprising conducting an aldol reaction of a carbonyl compound under basic conditions in the presence of the supported catalyst according to claim 1.

## Patentansprüche

1. Geträgerter Phosphazenkatalysator, worin ein Träger an eine durch die allgemeine Formel (1) dargestellte Gruppe gebunden ist: 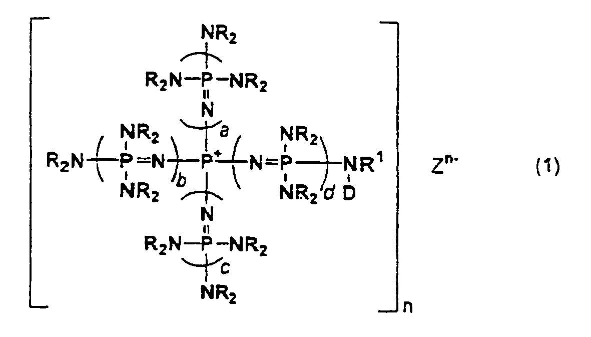 (worin n eine ganze Zahl von 1 bis 8 ist und die Anzahl der Phosphazenium-Kationen darstellt und Zⁿ⁻ ein Anion einer Verbindung mit aktivem Wasserstoff in einer Form ist, die durch Freisetzen von n Protonen von einer Verbindung mit aktivem Wasserstoff, die maximal 8 aktive Wasserstoffatome enthält, erhalten wird, worin die Verbindung mit aktivem Wasserstoff, die Zⁿ⁻ ergibt, ausgewählt ist aus der Gruppe von Verbindungen, die ein aktives Wasserstoffatom an einem Sauerstoffatom, einem Stickstoffatom, einem Schwefelatom und anorganischen Säuren aufweisen. a, b, c und d sind jeweils eine positive ganze Zahl von 3 oder kleiner. Die R stellen gleiche oder verschiedene Kohlenwasserstoffgruppen, die 1 bis 10 Kohlenstoffatome aufweisen, dar, und zwei R,
die jeweils an einem gemeinsamen Stickstoffatom lokalisiert sind, sind optional miteinander verbunden,
um eine Ringstruktur zu bilden. R¹ ist ein Wasserstoffatom oder eine Kohlenwasserstoffgruppe, die 1 bis 10 Kohlenstoffatome aufweist. D ist eine direkte Bindung oder eine divalente Gruppe und bindet den Katalysator an einen Träger, wobei die divalente Gruppe eine Kohlenwasserstoffgruppe ist, die optional ein Heteroatom aufweist, ausgewählt aus der Gruppe bestehend aus einem Sauerstoffatom, einem Schwefelatom, einem Stickstoffatom und einem Siliziumatom.)

2. Neuartige Phosphazenverbindung, dargestellt durch die allgemeine Formel (2): 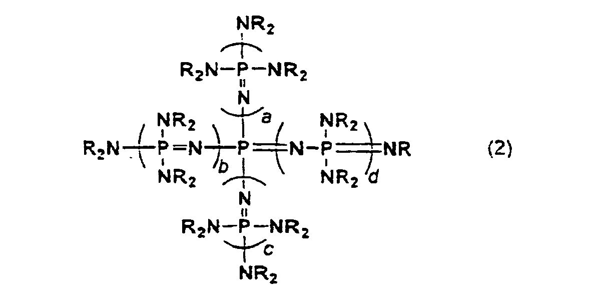 (worin a, b, c und d jeweils eine positive ganze Zahl von 3 oder kleiner darstellen. Die R stellen gleiche oder verschiedene Kohlenwasserstoffgruppen, die 1 bis 10 Kohlenstoffatome aufweisen, dar, und zwei R, die jeweils an einem gemeinsamen Stickstoffatom lokalisiert sind, sind optional miteinander verbunden, um eine Ringstruktur zu bilden.

3. Neuartige Phosphazenverbindung, dargestellt durch die allgemeine Formel (3): 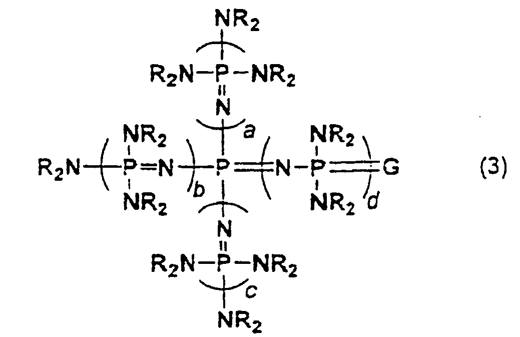 (worin a, b, c und d jeweils eine positive ganze Zahl von 3 oder kleiner sind. G ist ein Sauerstoffatom oder ein Schwefelatom. Die R sind gleiche oder verschiedene Kohlenwasserstoffgruppen, die 1 bis 10 Kohlenstoffatome aufweisen, und zwei R, die jeweils an einem gemeinsamen Stickstoffatom lokalisiert sind, sind optional miteinander verbunden, um eine Ringstruktur zu bilden.)

4. Neuartiges Phosphazeniumsalz, dargestellt durch die allgemeine Formel (4): 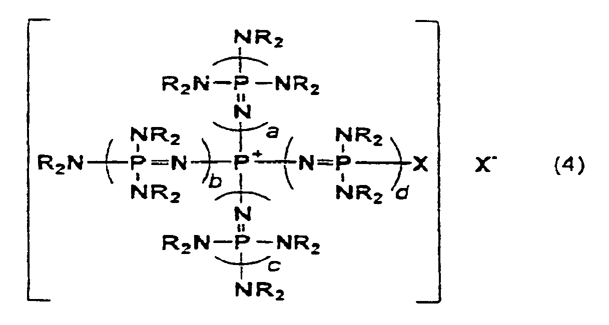 (worin a, b, c und d jeweils eine positive ganze Zahl von 3 oder kleiner darstellen. Die R stellen gleiche oder verschiedene Kohlenwasserstoffgruppen, die 1 bis 10 Kohlenstoffatome aufweisen, dar, und zwei R, die jeweils an einem gemeinsamen Stickstoffatom lokalisiert sind, sind optional miteinander verbunden, um eine Ringstruktur zu bilden. X ist ein Halogenatom, und X⁻ ist ein Anion eines Halogenatoms, welches das gleiche wie oder verschieden von X ist.)

5. Neuartiges Phosphazeniumsalz, dargestellt durch die allgemeine Formel (5): 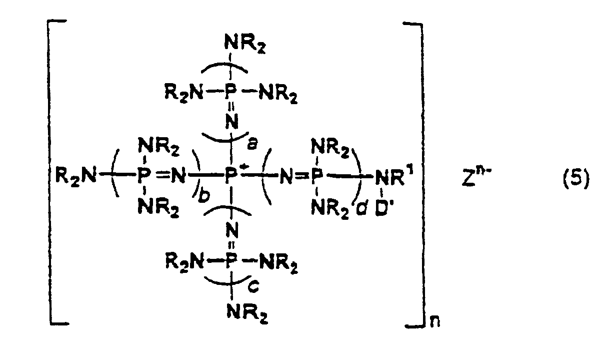 (worin n eine ganze Zahl von 1 bis 8 ist und die Anzahl der Phosphazenium-Kationen darstellt und Zⁿ⁻ ein Anion einer Verbindung mit aktivem Wasserstoff in einer Form ist, die durch Freisetzen von n Protonen von einer Verbindung mit aktivem Wasserstoff, die maximal 8 aktive Wasserstoffatome enthält, erhalten wird, worin die Verbindung mit aktivem Wasserstoff, die Zⁿ⁻ ergibt, ausgewählt ist aus der Gruppe von Verbindungen, die ein aktives Wasserstoffatom an einem Sauerstoffatom, einem Stickstoffatom, einem Schwefelatom und anorganischen Säuren aufweisen. a, b, c und d sind jeweils eine positive ganze Zahl von 3 oder kleiner. Die R stellen gleiche oder verschiedene Kohlenwasserstoffgruppen, die 1 bis 10 Kohlenstoffatome aufweisen, dar, und zwei R, die jeweils an einem gemeinsamen Stickstoffatom lokalisiert sind, sind optional miteinander verbunden, um eine Ringstruktur zu bilden. R¹ ist ein Wasserstoffatom oder eine Kohlenwasserstoffgruppe, die 1 bis 10 Kohlenstoffatome aufweist. D' ist eine monovalente Kohlenwasserstoffgruppe, die ein Heteroatom aufweist, welche an N gebunden ist, vorausgesetzt, dass es kein Wasserstoffatom und keine gesättigte Kohlenwasserstoffgruppe ist.)

6. Neuartiges Phosphazeniumsalz, dargestellt durch die allgemeine Formel (6): 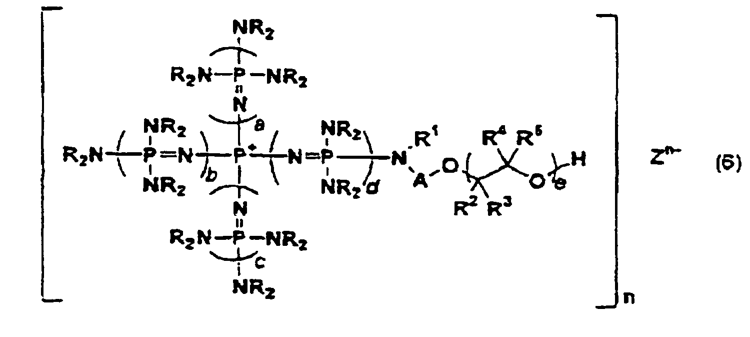 (worin n eine ganze Zahl von 1 bis 8 ist und die Anzahl der Phosphazenium-Kationen darstellt und Zⁿ⁻ ein Anion einer Verbindung mit aktivem Wasserstoff in einer Form ist, die durch Freisetzen von n Protonen von einer Verbindung mit aktivem Wasserstoff, die maximal 8 aktive Wasserstoffatome enthält, erhalten wird, worin die Verbindung mit aktivem Wasserstoff, die Zⁿ⁻ ergibt, ausgewählt ist aus der Gruppe von Verbindungen, die ein aktives Wasserstoffatom an einem Sauerstoffatom, einem Stickstoffatom, einem Schwefelatom und anorganischen Säuren aufweisen. a, b, c und d sind jeweils eine positive ganze Zahl von 3 oder kleiner. Die R stellen gleiche oder verschiedene Kohlenwasserstoffgruppen, die 1 bis 10 Kohlenstoffatome aufweisen, dar, und zwei R, die jeweils an einem gemeinsamen Stickstoffatom lokalisiert sind, sind optional miteinander verbunden, um eine Ringstruktur zu bilden. A ist eine Kohlenwasserstoffgruppe, die 1 bis 20 Kohlenstoffatome aufweist. Ferner ist R¹ ein Wasserstoffatom oder eine Kohlenwasserstoffgruppe, die 1 bis 10 Kohlenstoffatome aufweist. R², R³, R⁴ und R⁵ sind jeweils ein Wasserstoffatom oder eine Kohlenwasserstoffgruppe, die 1 bis 8 Kohlenstoffatome aufweist. e ist 0 bis 200.)

7. Neuartiges Phosphazeniumsalz, dargestellt durch die allgemeine Formel (7): 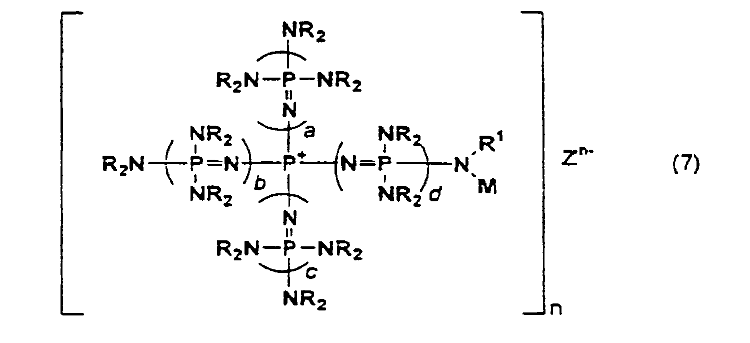 (worin n eine ganze Zahl von 1 bis 8 ist und die Anzahl der Phosphazenium-Kationen darstellt und Zⁿ⁻ ein Anion einer Verbindung mit aktivem Wasserstoff in einer Form ist, die durch Freisetzen von n Protonen von einer Verbindung mit aktivem Wasserstoff, die maximal 8 aktive Wasserstoffatome enthält, erhalten wird, worin die Verbindung mit aktivem Wasserstoff, die Zⁿ⁻ ergibt, ausgewählt ist aus der Gruppe von Verbindungen, die ein aktives Wasserstoffatom an einem Sauerstoffatom, einem Stickstoffatom, einem Schwefelatom und anorganischen Säuren aufweisen. a, b, c und d sind jeweils eine positive ganze Zahl von 3 oder kleiner. Die R stellen gleiche oder verschiedene Kohlenwasserstoffgruppen, die 1 bis 10 Kohlenstoffatome aufweisen, dar, und zwei R, die jeweils an einem gemeinsamen Stickstoffatom lokalisiert sind, sind optional miteinander verbunden, um eine Ringstruktur zu bilden. R¹ ist ein Wasserstoffatom oder eine Kohlenwasserstoffgruppe, die 1 bis 10 Kohlenstoffatome aufweist. M ist eine Gruppe, die eine ungesättigte Kohlenstoff-Kohlenstoff-Bindung aufweist.)

8. Neuartiges Phosphazeniumsalz, dargestellt durch die allgemeine Formel (8): 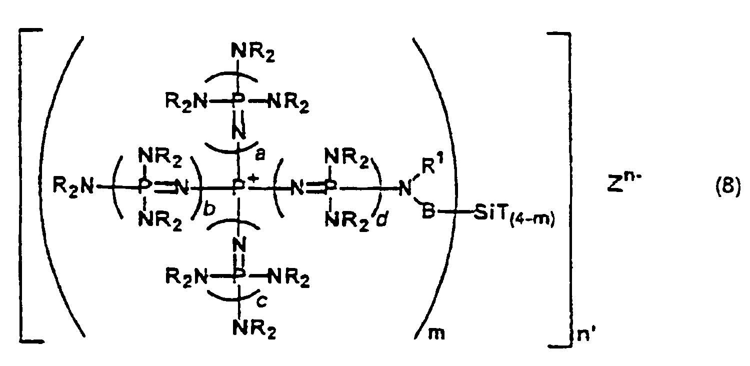 (worin m eine ganze Zahl von 1 bis 3 ist und die Anzahl der Phosphazenium-Kationen, die an ein Siliziumatom gebunden sind, darstellt, n' eine ganze Zahl von 1 bis 8 ist und die Anzahl der Siliziumverbindungen, an die Phosphazenium-Kationen gebunden sind, darstellt, n ein Multiplikator von m und n' ist und Zⁿ⁻ ein Anion einer Verbindung mit aktivem Wasserstoff in einer Form ist, die durch Freisetzen von n Protonen von einer Verbindung mit aktivem Wasserstoff erhalten wird, die maximal 24 aktive Wasserstoffatome aufweist, worin die aktive Wasserstoffverbindung, die Zⁿ⁻ ergibt, ausgewählt ist aus der Gruppe von Verbindungen, die ein aktives Wasserstoffatom an einem Sauerstoffatom, einem Stickstoffatom, einem Schwefelatom und anorganischen Säuren aufweisen. a, b, c und d sind jeweils eine positive ganze Zahl von 3 oder kleiner. Die R stellen die gleiche oder verschiedene Kohlenwasserstoffgruppen, die 1 bis 10 Kohlenstoffatome aufweisen, dar, und zwei R, die jeweils an einem gemeinsamen Stickstoffatom lokalisiert sind, sind optional miteinander verbunden, um eine Ringstruktur zu bilden. B ist eine Kohlenwasserstoffgruppe, die 1 bis 20 Kohlenstoffatome aufweist. Ferner ist R¹ ein Wasserstoffatom oder eine Kohlenwasserstoffgruppe, die 1 bis 10 Kohlenstoffatome aufweist. T ist eine funktionelle Gruppe, worin eine Si-T-Bindung durch Hydrolyse gebrochen werden kann und die ausgewählt ist aus der Gruppe bestehend aus einem Halogenatom und einer Alkoxygruppe.)

9. Verfahren zur Herstellung eines Polyalkylenoxids, umfassend das Polymerisieren eines Alkylenoxids in der Gegenwart des geträgerten Katalysators gemäß Anspruch 1.

10. Verfahren zur Herstellung eines aromatischen Ethers, umfassend die Reaktion einer aromatischen Verbindung, die mindestens eine Hydroxylgruppe gebunden an ihren aromatischen Ring aufweist, mit einem Kohlensäure-Diester in der Gegenwart des geträgerten Katalysators gemäß Anspruch 1.

11. Verfahren zur Herstellung einer ß-Hydroxycarbonylverbindung und/oder einer α,ß-ungesättigten Carbonylverbindung, umfassend das Durchführen einer Aldolreaktion einer Carbonylverbindung unter basischen Bedingungen in der Gegenwart des geträgerten Katalysators gemäß Anspruch 1.

## Revendications

1. Catalyseur supporté sur phosphazène dans lequel un support est lié à un groupe représenté par la formule générale (1) : 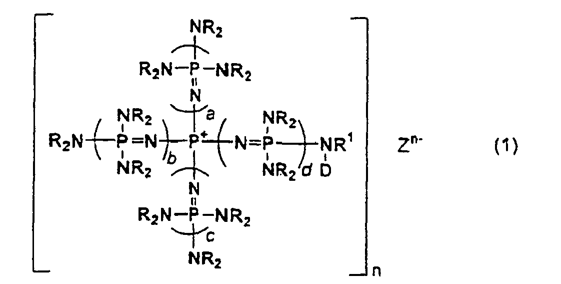 (où n est un entier de 1 à 8 et représente le nombre de cations de phosphazénium, et Zⁿ⁻ est un anion d'un composé d'hydrogène actif ayant une forme dérivée en libérant n protons d'un composé d'hydrogène actif ayant un maximum de 8 atomes d'hydrogène actifs, où le composé d'hydrogène actif donnant Zⁿ⁻ est sélectionné dans le groupe de composés ayant un atome d'hydrogène actif sur un atome d'oxygène, un atome d'azote, un atome de soufre et des acides inorganiques. a, b, c et d sont chacun un entier positif de 3 ou moins. Les R représentent des groupes hydrocarbonés identiques ou différents ayant de 1 à 10 atomes de carbone et deux R situés sur chaque atome d'azote commun se lient facultativement l'un à l'autre pour former une structure cyclique. R¹ est un atome d'hydrogène ou un groupe hydrocarboné ayant de 1 à 10 atomes de carbone. D est une liaison directe ou un groupe divalent et lie le catalyseur à un support, le groupe divalent étant un groupe hydrocarboné qui a facultativement un hétéroatome sélectionné dans le groupe se composant d'un atome d'oxygène, d'un atome de soufre, d'un atome d'azote, et d'un atome de silicium.)

2. Nouveau composé de phosphazène représenté par la formule générale (2) : 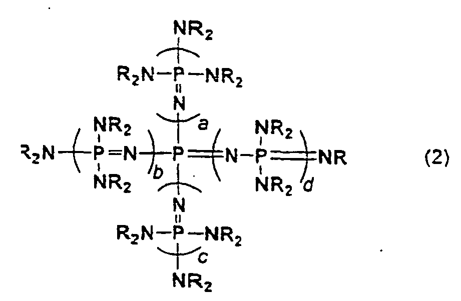 (où a, b, c et d représentent un entier positif de 3 ou moins, respectivement. Les R représentent des groupes hydrocarbonés identiques ou différents ayant de 1 à 10 atomes de carbone et deux R situés sur chaque atome d'azote commun se lient facultativement l'un à l'autre pour former une structure cyclique.)

3. Nouveau composé de phosphazène représenté par la formule générale (3): 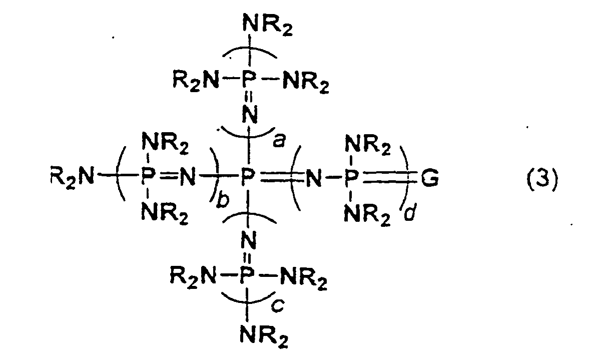 (où a, b, c et d sont chacun un nombre entier positif de 3 ou moins. G est un atome d'oxygène ou un atome de soufre. Les R sont des groupes hydrocarbonés identiques ou différents ayant de 1 à 10 atomes de carbone et deux R situés sur chaque atome d'azote commun se lient facultativement l'un à l'autre pour former une structure cyclique.)

4. Nouveau sel de phosphazénium représenté par la formule générale (4) : 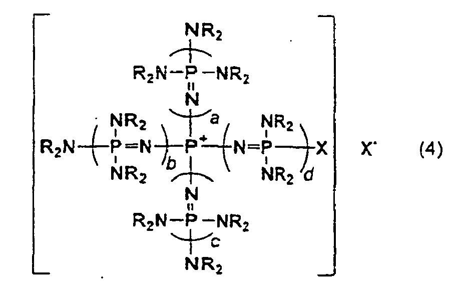 (où a, b, c et d sont chacun un entier positif de 3 ou moins. Les R représentent des groupes hydrocarbonés identiques ou différents ayant de 1 à 10 atomes de carbone et deux R situés sur chaque atome d'azote commun se lient facultativement l'un à l'autre pour former une structure cyclique. X est un atome d'halogène, et X⁻ est un anion d'un atome d'halogène qui est identique à ou différent de X.)

5. Nouveau sel de phosphazénium représenté par la formule générale (5) : 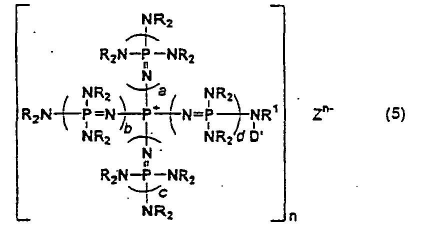 (où n est un entier de 1 à 8 et représente le nombre de cations phosphazénium, et Zⁿ⁻ est un anion d'un composé d'hydrogène actif ayant une forme dérivée en libérant n protons d'un composé d'hydrogène actif ayant un maximum de 8 atomes d'hydrogène actifs, où le composé d'hydrogène actif donnant Zⁿ⁻ est sélectionné dans le groupe des composés ayant un atome d'hydrogène actif sur un atome d'oxygène, un atome d'azote, un atome de soufre et des acides inorganiques. a, b, c et d sont chacun un entier positif de 3 ou moins. Les R représentent des groupes hydrocarbonés identiques ou différents ayant de 1 à 10 atomes de carbone et deux R situés sur chaque atome d'azote commun se lient facultativement l'un à l'autre pour former une structure cyclique. R¹ est un atome d'hydrogène ou un groupe hydrocarboné ayant de 1 à 10 atomes de carbone. D' est un groupe hydrocarboné monovalent ayant un hétéroatome qui est lié à N à condition qu'il soit autre qu'un atome d'hydrogène et un groupe hydrocarboné saturé.)

6. Nouveau sel de phosphazénium représenté par la formule générale (6) : 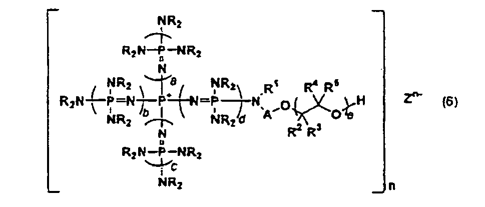 (où n est un entier de 1 à 8 et représente le nombre de cations phosphazénium, et Zⁿ⁻ est un anion d'un composé d'hydrogène actif ayant une forme dérivée en libérant n protons d'un composé d'hydrogène actif ayant un maximum de 8 atomes d'hydrogène actif, où le composé d'hydrogène actif donnant Zⁿ⁻ est sélectionné dans le groupe de composés ayant un atome d'hydrogène actif sur un atome d'oxygène, un atome d'azote, un atome de soufre et des acides inorganiques a, b, c et d sont chacun un entier positif de 3 ou moins. Les R représentent des groupes hydrocarbonés identiques ou différents ayant de 1 à 10 atomes de carbone et deux R situés sur chaque atome d'azote commun se lient facultativement l'un à l'autre pour former une structure cyclique. A est un groupe hydrocarboné ayant de 1 à 20 atomes de carbone. En outre, R¹ est un atome d'hydrogène ou un groupe hydrocarboné ayant de 1 à 10 atomes de carbone. R², R³, R⁴ et R⁵ sont chacun un atome d'hydrogène ou un groupe hydrocarboné ayant de 1 à 8 atomes de carbone, e est de 0 à 200.)

7. Nouveau sel de phosphazénium représenté par la formule générale (7) : 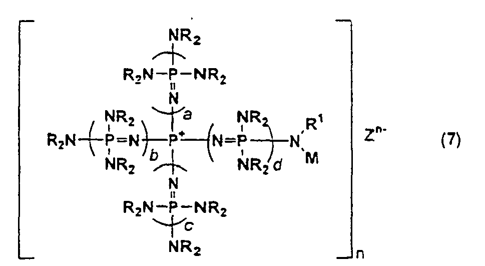 (où n est un entier de 1 à 8 et représente le nombre de cations phosphazénium, et Zⁿ⁻ est un anion d'un composé d'hydrogène actif ayant une forme dérivée en libérant n protons d'un composé d'hydrogène actif ayant un maximum de 8 atomes d'hydrogène actifs, où le composé d'hydrogène actif donnant Zⁿ⁻ est sélectionné dans le groupe de composés ayant un atome d'hydrogène actif sur un atome d'oxygène, un atome d'azote, un atome de soufre et des acides inorganiques. a, b, c et d sont chacun un entier positif de 3 ou moins. Les R représentent des groupes hydrocarbonés identiques ou différents ayant de 1 à 10 atomes de carbone et deux R situés sur chaque atome d'azote commun se lient facultativement l'un à l'autre pour former une structure cyclique. R¹ est un atome d'hydrogène ou un groupe hydrocarboné ayant de 1 à 10 atomes de carbone. M est un groupe ayant une liaison carbone-carbone non-saturée.)

8. Nouveau sel de phosphazénium représenté par la formule générale (8) : 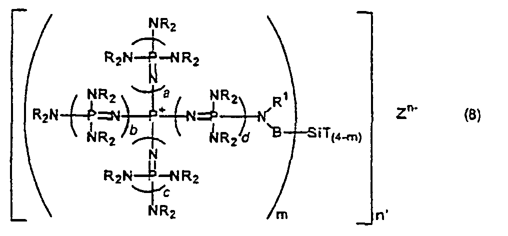 (où m est un entier de 1 à 3 et représente le nombre de cations phosphazénium liés à un atome de silicium, n' est un entier de 1 à 8 et représente le nombre de composés de silicium auxquels des cations phosphazénium sont liés, n est un multiplicateur de m et n¹, et Zⁿ⁻ est un anion d'un composé d'hydrogène actif ayant une forme dérivée en libérant n protons d'un composé d'hydrogène actif ayant un maximum de 24 atomes d'hydrogène actif, où le composé d'hydrogène actif donnant Zⁿ⁻ est sélectionné dans le groupe de composés ayant un atome d'hydrogène actif sur un atome d'oxygène, un atome d'azote, un atome de soufre et des acides inorganiques. a, b, c et d sont chacun un entier positif de 3 ou moins. Les R représentent des groupes hydrocarbonés identiques ou différents ayant de 1 à 10 atomes de carbone et deux R situés sur chaque atome d'azote commun se lient facultativement l'un à l'autre pour former une structure cyclique. B est un groupe hydrocarboné ayant de 1 à 20 atomes de carbone. En outre, R¹ est un atome d'hydrogène ou un groupe hydrocarboné ayant de 1 à 10 atomes de carbone. T est un groupe fonctionnel dans lequel une liaison Si-T peut être rompue par hydrolyse, et est sélectionné dans le groupe constitué par un atome d'halogène et un groupe alcoxy.)

9. Procédé pour produire un oxyde de polyalkylène, comprenant la polymérisation d'un oxyde d'alkylène en présence du catalyseur supporté selon la revendication 1.

10. Procédé pour produire un éther aromatique, comprenant le fait de permettre à un composé aromatique ayant au moins un groupe hydroxyle lié à son cycle aromatique de réagir avec un diester d'acide carbonique en présence du catalyseur supporté selon la revendication 1.

11. Procédé pour produire un composé β-hydroxycarbonyle et/ou un composé carbonyle α,β-insaturé comprenant la réalisation d'une réaction aldol d'un composé carbonylé dans des conditions basiques en présence du catalyseur supporté selon la revendication 1.
